(19) Europäisches Patentamt
European Patent Office
Office européen des brevets

(11) **EP 3 217 511 A1**

(12) **EUROPEAN PATENT APPLICATION**
published in accordance with Art. 153(4) EPC

(43) Date of publication:
**13.09.2017 Bulletin 2017/37**

(51) Int Cl.:
*H02J 13/00* (2006.01)     *H02J 3/14* (2006.01)

(21) Application number: **14905331.6**

(86) International application number:
**PCT/JP2014/079215**

(22) Date of filing: **04.11.2014**

(87) International publication number:
**WO 2016/071956 (12.05.2016 Gazette 2016/19)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Mitsubishi Electric Corporation
Chiyoda-ku
Tokyo 100-8310 (JP)**

(72) Inventors:
• **YABE, Masaaki
Tokyo 100-8310 (JP)**

• **MARUYAMA, Ichiro
Tokyo 100-8310 (JP)**
• **MINEZAWA, Satoshi
Tokyo 100-8310 (JP)**
• **YANO, Hirotoshi
Tokyo 100-8310 (JP)**

(74) Representative: **Pfenning, Meinig & Partner mbB
Patent- und Rechtsanwälte
Theresienhöhe 11a
80339 München (DE)**

(54) **CONTROLLER, DEVICE CONTROL METHOD, AND PROGRAM**

(57) In a controller (100), memories (406, 407) store device status data indicating an operation status of an electrical device, and measurement value data indicating an actual achieved value of a power consumption amount of the electrical device. When an energy saving is requested, a projector (408) calculates, based on the device status data and the measurement data, a first projection value for the power consumption amount of the electrical device in accordance with a first execution plan responding to the request, and a second projection value for the power consumption amount of the electrical device in accordance with a second execution plan not to respond to the request. A calculator (409) presents a projection result to the user.

FIG. 4

EP 3 217 511 A1

**Description**

Technical Field

The present disclosure relates to a controller, a device control method, and a program which are suitable for presenting, to a user in an easy-to-understand way, a benefit derived upon responding to an energy-saving request, and for increasing the energy-saving accomplishment.

Background Art

When the wholesale market price of electric power soars, and when the reliability for the electricity supply capability of an electric power supplier may drop, the electric power supplier may make an energy-saving request to electricity consumers so as to suppress the usage of electric power. A control to cause electricity consumers to reduce the usage of electric power in accordance with a change in the electricity billing rate and an acceptance of an incentive both presented by an electric power supplier is called a demand-response (DR).
In recent years, frameworks to accomplish the demand-response have been proposed. For example, Patent Literature 1 discloses a system that displays, upon receiving a DR signal, a demand-response request on a screen of a digital television, thereby notifying electricity consumers of the demand-response request.

Citation List

Patent Literature

Patent Literature 1: Unexamined Japanese Patent Application Kokai Publication No. 2014-120787

Summary of Invention

Technical Problem

According to the above conventional technology, however, although the demand-response request is presented to a user, any financial benefit and any environmental benefit derived from responding to such a request are not presented. Hence, advantages derived from responding to the demand-response request were not easily discernible by the user, and consequently there was risk of demand-response not gaining serious attention and the benefit of the demand-response not being increased.
The present disclosure has been made in view of the foregoing circumstances, and an objective is to provide a controller, a device control method, and a program which are suitable for presenting, to a user in an easy-to-understand way, a benefit derived from responding to an energy-saving request, and for increasing an energy-saving accomplishment.

Solution to Problem

In order to accomplish the above objective, a controller according to the present disclosure includes:

a storage configured to store device status data indicating an operation status of an electrical device, and measurement value data indicating an actual achieved value of a power consumption amount of the electrical device;
a projector configured to calculate, when an energy saving is requested, based on the device status data and the measurement value data, a first projection value for the power consumption amount of the electrical device in accordance with a first execution plan responding to the request, and a second projection value for the power consumption amount of the electrical device in accordance with a second execution plan not responding to the request; and
a presenter configured to present a projection result by the projector to a user.

Advantageous Effects of Invention

According to the present disclosure, a benefit derived from responding to an energy-saving request can be presented to a user in an easy-to-understand way, and an energy-saving accomplishment can be increased.

Brief Description of Drawings

FIG. 1 is a diagram illustrating an overall configuration of a device control system;
FIG. 2 is a diagram illustrating a hardware configuration of a controller;
FIG. 3 is a diagram illustrating a hardware configuration of a user terminal;
FIG. 4 is a diagram illustrating a functional configuration of the device control system;
FIG. 5 is an example display of a DR instruction;
FIG. 6 is an example display of a DR instruction;
FIG. 7 is a diagram illustrating an example structure of schedule information;
FIG. 8 is a diagram illustrating an example of a created execution plan;
FIG. 9A is a diagram illustrating example device status data;
FIG. 9B is a diagram illustrating example device status data;
FIG. 10A is a diagram illustrating example measurement data;
FIG. 10B is a diagram illustrating example measurement data;
FIG. 11A is a diagram illustrating example billing data;
FIG. 11B is a diagram illustrating example billing data;
FIG. 11C is a diagram illustrating example billing data;
FIG. 12 is a diagram illustrating example advisory information presented to a user when an announcement notification is received;
FIG. 13 is a diagram illustrating example advisory information presented to the user within an energy-saving time segment;
FIG. 14 is a diagram illustrating another example advisory information presented to the user within the energy-saving time segment;
FIG. 15 is a diagram illustrating example advisory information presented to the user after the end of the energy-saving time segment;
FIG. 16 is a flowchart for illustrating an initial setting process;
FIG. 17 is an example layout of a screen for accepting an initial setting input;
FIG. 18 is a flowchart for illustrating a device control process;
FIG. 19 is a flowchart for illustrating an announcement process;
FIG. 20 is a flowchart for illustrating an execution process;
FIG. 21 is a flowchart for illustrating a cancellation process;
FIG. 22 is a flowchart for illustrating an energy-saving process;
FIG. 23 is a diagram illustrating example advisory information that prompts the user for confirmation;
FIG. 24 is a diagram illustrating an example structure of notification information;
FIG. 25 is a diagram illustrating example advisory information indicating a projection result;
FIG. 26 is a diagram illustrating an example structure of record information;
FIG. 27 is a diagram illustrating example advisory information containing a calculation result by a DRAS;
FIG. 28 is a diagram illustrating example comparison data containing actual results of DR instruction and electricity billing rate;
FIG. 29 is a diagram illustrating example advisory information for comparing electric power suppliers against each other; and
FIG. 30 is a diagram illustrating example advisory information for comparing billing plans against each other.

Description of Embodiments

Embodiment 1

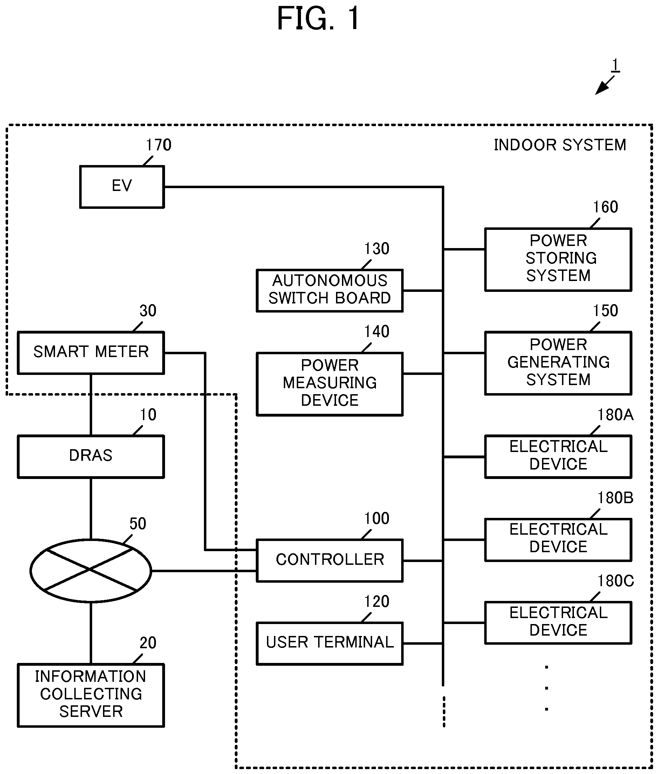

FIG. 1 illustrates an overall configuration of a device control system 1 according to this embodiment. The device control system 1 monitors the power amount consumed by at least one electrical device 180 (in FIG. 1, three devices 180A, 180B, and 180C) installed in a dwelling, and controls the electrical device 180, and the like.

Provided in the dwelling are a controller 100, a user terminal 120, an autonomous switch board 130, a power measuring device 140, a power generating system 150, a power storing system 160, an electric vehicle (EV) 170, the electrical device 180, and a smart meter 30. A part of the entire device control system 1 provided in the dwelling is referred to as an indoor system.

The user is able to use (drive) the electric vehicle 170 separated from the device control system 1, and in general, the smart meter 30 is not managed by the user but instead by the electric power supplier, but for the convenience of understanding, the electric vehicle 170 and the smart meter 30 are considered as components of the indoor system.

Although FIG. 1 illustrates a single indoor system, the device control system 1 is capable of having the multiple indoor systems. Typically, an individual electricity consumer (hereinafter, referred to as "user") is associated with an individual indoor system.

A Demand-Response Automation Server (hereinafter, abbreviated as "DRAS") 10 is a server utilized to make an energy-saving request to the user based on a balance between the demand of the electric power and the supply thereof, or a change in the market price of the electric power, and the like. The DRAS 10 is managed by an electric power supplier that generates the electric power, and supplies the generated electric power to the user.

The term Demand-Response (hereinafter, abbreviated as "DR") is to control the electrical device 180, and the like, in such a way that the indoor system reduces the power consumption amount in accordance with a change in price or a provided incentive to the user when the market price of electric power soars and when the reliability of the electricity supply capability of the electric power supplier may drop.

Example specific methods of the DR are Critical Peak Pricing (CPP), Peak Time Rebate (PTR), and Real Time Pricing (RTP).

According to the CPP, the retail price within a time slot at which the electric power demand reaches the peak is set to be high relative to the retail price within the other time slots. Since the electricity billing rate within the peak time slot becomes high, a reduction in usage of electricity by the user within the peak time slot is expectable. This consequently reduces the possibility of the total supplied amount being insufficient relative to the total demanded amount, thereby ensuring the reliability of electricity supply capability.

According to the PTR, when the user reduces the electricity usage amount within the peak time slot, a portion of the electricity billing amount is returned to the user based on the reduced electricity usage amount. Since the electricity billing amount to be paid is reduced when the user suppresses the electricity usage within the peak time slot, a reduction in usage of electricity within the peak time slot by the user is expectable. This consequently reduces the possibility of the total supplied amount being insufficient relative to the total demanded amount, thereby ensuring the reliability of electricity supply capability.

According to the RTP, the retail price of the electric power in the near future (for example, the next day) is changed by the electric power supplier based on an expected change in total demanded amount and in total supplied amount. A reduction in usage of electricity by the user within a time slot during which the retail price is set to be relatively high is expectable. This consequently reduces the possibility of the total supplied amount being insufficient relative to the total demanded amount, thereby ensuring the reliability of electricity supply capability.

The specific methods of the DR are not limited to the above examples. For example, the electric power supplier may set a different electricity billing rate for each time slot beforehand, and the electricity billing rate may be changed moment to moment in accordance with the balance between power demand and power supply.

An information collecting server 20 collects information on the multiple indoor systems. For example, the information collecting server 20 collects information on a status of participation in the DR, and the like, from the multiple indoor systems connected to a communication network 50, and provides, to the user, information like the percentage of participation in the DR.

The smart meter 30 measures the power consumption amount of the electrical device 180, and the like, within the indoor system, and transmits the measurement result to a server (not illustrated) managed by the electric power supplier via the communication network 50.

The communication network 50 connects the indoor system, the DRAS 10, and the information collecting server 20 so as to be communicable with one another. A typical communication network 50 is the Internet.

The controller 100 receives an announcement notification announcing the execution of DR, an execution notification indicating the execution of DR as announced, and a cancellation notification indicating the cancellation of the execution of the DR (hereinafter, those notifications are collectively referred to as a "DR instruction") all output by the DRAS 10, and performs a control to suppress the power consumption amount of the electrical device 180 within the noticed time segment or a control for a preparation before the noticed time segment. In addition, the controller 100 is capable of controlling each device and system within the indoor system regardless of the DR instruction.

The user terminal 120 is, for example, a mobile phone, a smartphone, a personal computer, or a tablet type terminal. The user is able to carry around the user terminal 120, and check the status, and the like, of the device control system 1 via the user terminal 120.

The autonomous switch board 130 connects the indoor power line to an external commercial power supply, or disconnects the indoor power line from the external commercial power supply.

There are two types of operation modes for the indoor system. The one is a linking mode which connects the indoor power line to the commercial power supply via the autonomous switch board 130, and receives the electric power supplied from the commercial power supply. In the linking mode, a supply of the generated electric power (electric power selling) by the power generating system 150 is also enabled.

The other one is an autonomous mode which disconnects the indoor power line from the commercial power supply via the autonomous switch board 130, and the generated electric power by the power generating system 150 and/or the stored electric power in the power storing system 160 are/is supplied within the indoor system without a supply of electric power from the commercial power supply.

The operation mode change is performed by the autonomous switch board 130 based on the detection result which is detected by the autonomous switch board 130, and which indicates the electric power supply status from the commercial power supply. Typically, when an outage occurs in the commercial power supply, the setting for the autonomous mode is made, and when there is no outage in the commercial power supply, the setting for the linking mode is made.

At least one power measuring device 140 is installed in the indoor system. The power measuring device 140 measures the power amount flowing from the power generating system 150 to the indoor power line, the power amount flowing from the power storing system 160 to the indoor power line or from the indoor power line to the power storing system 160, a power amount consumed by the electrical device 180, and the like. The measurement result by the power measuring device is transmitted to the controller 100 as needed. The controller 100 receives and stores the measurement result.

The power generating system 150 performs solar power generation, and supplies the generated electric power to the indoor power line or to the power storing system 160. The power generation method according to the present invention is not limited to the solar power generation, and may be other types of power generation.

The power storing system 160 stores the electric power supplied from the commercial power supply or the generated electric power by the power generating system 150.

The electric vehicle 170 is an automobile that uses the electricity as a power source. When connected to the indoor system, the electric vehicle 170 functions as a battery that is capable of charging and discharging at any given time. When not connected to the indoor system, the electric vehicle 170 is an automobile that runs on electricity stored in the battery.

The electrical device 180 is connected to the indoor power line, and operates upon receiving the electric power supplied from at least one of the commercial power supply, the power generating system 150, and the power storing system 160.

The specific examples of the electrical device 180 are an air conditioner, an electrical cooker, a television receiver, a ventilation system, a hot-water supply system, and a floor heating system. However, the types of the electrical device 180 are not limited to those examples, and may be a device or a system that is electrically powered, and controllable by the controller 100.

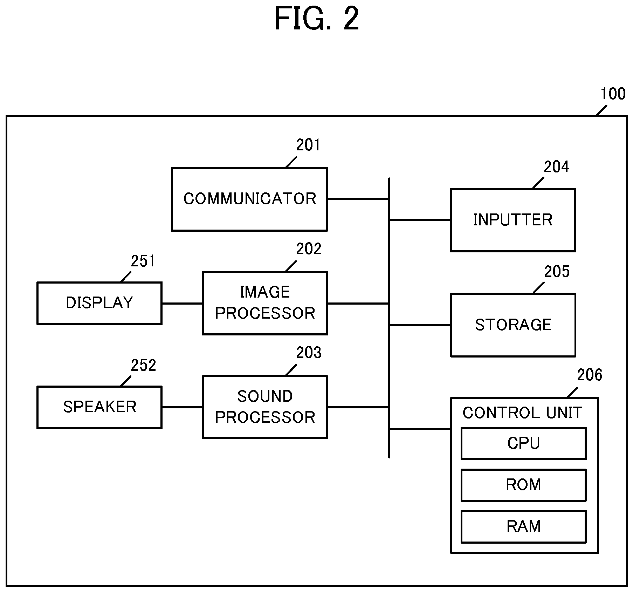

Next, a hardware configuration of the controller 100 is described with reference to FIG. 2.

A communicator 201 includes a Network Interface Card (NIC), and communicates to the user terminal 120, the autonomous switch board 130, the power measuring device 140, the power generating system 150, the power storing system 160, the electric vehicle 170, the electrical device 180, and the smart meter 30 all in the indoor system.

The communicator 201 may communicate to the DRAS 10 via the smart meter 30, and may communicate to the DRAS 10 via the communication network 50. In this embodiment, the communicator 201 communicates to the DRAS 10 mainly via the communication network 50.

An image processor 202 generates data for forming a screen to be displayed on a display 251 and then displays the data on the display 251.

A sound processor 203 obtains sound data from a storage 205, and then reproduces and outputs sounds from a speaker 252.

An inputter 204 includes input devices that accepts a user input, such as a button and a touch panel.

The storage 205 includes a storage device like a hard disk, and stores various programs to control the controller 100, data indicating the power amount and received from the power measuring device 140, an Operating System (OS), image data, sound data, text data, and the like.

A control unit 206 includes a CPU, ROM, and RAM, and controls the entire controller 100.

The DRAS 10 and the information collecting server 20 employ a hardware configuration similar to that of the controller 100. Hence, detailed description thereof is omitted. The DRAS 10 and the information collecting server 20 may each include at least configurations similar to that of the communicator 201, the storage 205, and the control unit 206.

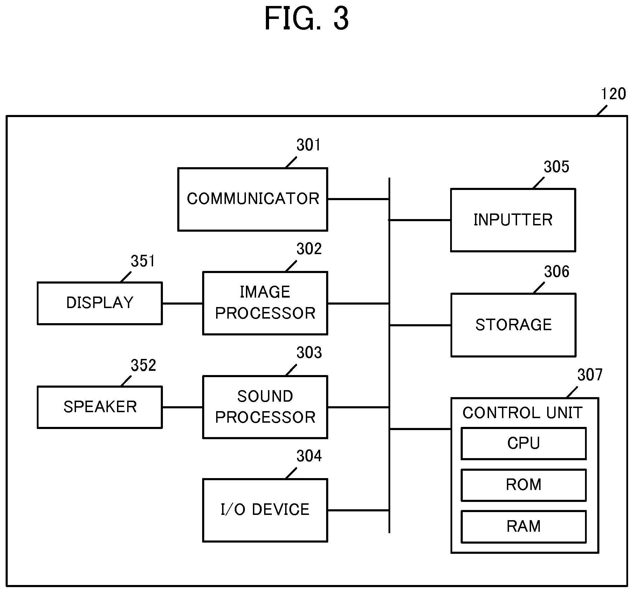

Next, a description is given of a hardware configuration of the user terminal 120 with reference to FIG. 3.

A communicator 301 includes an NIC, and communicates to the controller 100.

The image processor 302 generates data for forming a screen to be displayed on a display 351 and then displays the data on the display 351.

A sound processor 303 obtains sound data from a storage 306, and then reproduces and outputs sounds from a speaker 352.

An I/O device 304 includes an interface like a Universal Serial Bus (USB), and connects a memory card, an external hard disk, and the like, to the user terminal 120.

An inputter 305 includes input devices, such as a button and a touch panel, that accept a user input.

A storage 306 includes a storage device like a hard disk, and stores various programs to control the user terminal 120, an OS, image data, sound data, text data, and the like.

A control unit 307 includes a CPU, ROM, and RAM, and controls the entire user terminal 120.

Next, the details of the processes executed by the device control system 1 according to this embodiment are described.

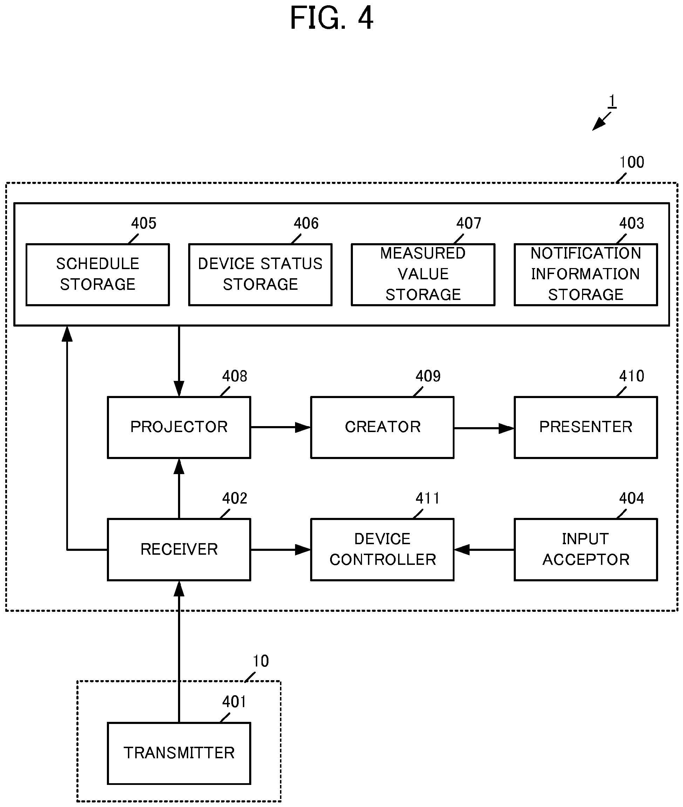

FIG. 4 illustrates a functional configuration of the device control system 1.

Upon receiving data indicating the DR instruction from the DRAS 10 via the smart meter 30 or the communication network 50, the controller 100 determines the details of the DR instruction, and displays the determined result on the display 251. Upon reviewing the details of the displayed DR instruction on the display 251, the user decides to respond or not to respond to the energy-saving request, that is, whether to cause the controller 100 to perform a control so as to suppress the power consumption of the electrical device 180 in accordance with the DR instruction. When the user gives an instruction to respond to the energy-saving request, the controller 100 controls the electrical device 180 so as to suppress the power consumption thereof in accordance with the DR instruction.

There are three types of DR instruction transmitted from the DRAS 10 which are (1) an announcement notification announcing the energy-saving request beforehand, (2) an execution notification that is a notification of the execution of the energy saving as announced, and (3) a cancellation notification that is a notification of the cancellation of the execution of the noticed energy saving.

The announcement notification informs the user of an upcoming energy-saving request. The announcement notification contains information indicating a time segment at which the energy saving is requested. Upon the announcement notification, the energy saving is requested to the user beforehand so as to reduce the power consumption amount at, for example, the specified time slot one day after. However, this announcement may be canceled.

The execution notification informs the user of the energy-saving request as announced within the time segment announced by the announcement notification.

The cancellation notification informs the user of the cancellation of the energy-saving request within the noticed time segment by the announcement notification.

After transmitting the announcement notification to the controller 100, the DRAS 10 transmits, before the start date and time of the time segment indicated by the announcement notification arrives, either the execution notification or the cancellation notification to the controller 100.

According to this embodiment, the DRAS 10 transmits the announcement notification to the controller 100 on a day that is one day before the start date and time of the energy-saving request. However, the time span (announcement time segment) until the start date and time of the energy-saving request after the date and time at which the announcement notification is transmitted is optional, such as 12 hours before the start date and time of the energy-saving request or 1 hour before the start date and time of the energy-saving request, instead of the example case that is one day before.

The DRAS 10 may transmit to the controller 100 the execution notification without the announcement notification. In this case, the energy saving is immediately requested to the user without an announcement time segment.

The control unit of the DRAS 10 and the communicator thereof work together to function as a transmitter 401 that transmits the DR instruction to the controller 100. In addition, the control unit 206 of the controller 100 and the communicator 201 thereof work together to function as a receiver 402 that receives the DR instruction from the DRAS 10.

Upon receiving the DR instruction from the DRAS 10, the control unit 206 of the controller 100 stores the information indicating the received DR instruction in the storage 205. The storage 205 of the controller 100 functions as a notification information storage 403 that stores the information indicating the received DR instruction.

The control unit 206 of the controller 100 displays the information indicating the details of the received DR instruction on the display 251.

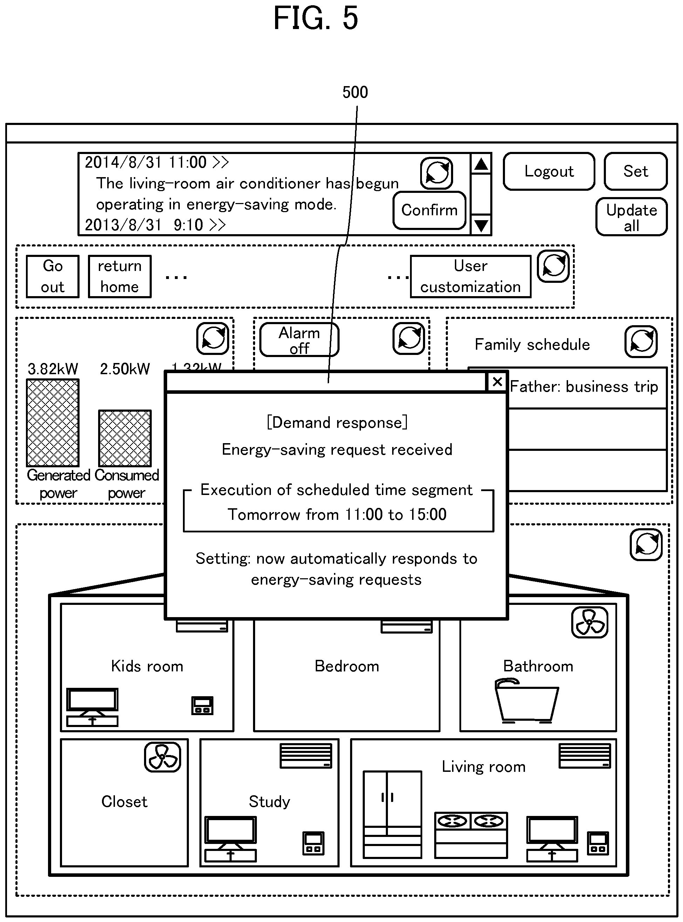

FIG. 5 illustrates an example display of the DR instruction indicating the announcement notification. The control unit 206 of the controller 100 superimposes, in a popped-out manner, advisory information 500 indicating the DR information onto the home screen that indicates the entire status of the device control system 1.

The control unit 206 of the controller 100 accepts a user input that specifies to respond or not to respond to the energy-saving request based on the received DR instruction. The control unit 206 of the controller 100 and the inputter 204 thereof work together to function as an input acceptor 404 that accepts an input user instruction.

In this embodiment, the control unit 206 of the controller 100 accepts beforehand the user input that specifies to respond or not to respond to the energy-saving request prior to the reception of the DR instruction, and stores the accepted input details in the storage 205. Upon receiving the DR instruction, the control unit 206 of the controller 100 determines to respond or not to respond to the energy-saving request based on the input details stored in the storage 205, and transmits data indicating the determination result to the DRAS 10. The DRAS 10 receives the data indicating the determination result from the controller 100, and stores this data in association with the identification information of the controller 100 (or the identification information of the user). The DRAS 10 is then enabled to determine which indoor system among the multiple indoor systems responds to the energy-saving request, and which indoor system does not respond to the energy-saving request.

The information collecting server 20 obtains the data indicating the determination result from the DRAS 10 at a constant cycle, and tallies the DR participation percentage. For example, the DR instruction is transmitted to the controller 100 installed in each dwelling within an area subjected to the energy-saving request by the DRAS 10, and reply data indicating to respond or not to respond to the energy-saving request is received from each controller 100. The rate of the number of controllers 100 that have transmitted the reply data indicating a response to the energy-saving request relative to the number of controllers 100 that are transmission destinations of the DR instruction becomes the DR participation percentage.

When the controller 100 requests a transmission of the calculation result for the DR participation percentage, the information collecting server 20 transmits the calculation result to the controller 100. The control unit 206 of the controller 100 displays the calculation result on the display 251.

In the advisory information 500 indicating the DR instruction, the control unit 206 of the controller 100 displays that, based on the setting indicating to respond or not to respond to the energy-saving request accepted beforehand, the setting is made so as to respond to the energy-saving request or not to respond thereto.

Note that the control unit 206 of the controller 100 may display, in the advisory information 500, a software button (hereinafter, referred to as a "button") that accepts a user instruction to change from the setting not to respond to the energy-saving request to the setting to respond to the energy-saving request, or a button that accepts a user instruction to change from the setting to respond to the energy-saving request to the setting not to respond to the energy-saving request. In addition, the control unit 206 of the controller 100 may change the setting indicating to respond or not to respond to the energy-saving request accepted beforehand based on the user instruction given via the button, and may transmit the details of setting change to the DRAS 10.

The control unit 206 of the controller 100 may accept a user instruction that specifies to respond or not to respond to the energy-saving request based on the received DR instruction every time the DR instruction is received. Upon receiving the DR instruction, the control unit 206 of the controller 100 may determine to respond or not to respond to the energy-saving request, and may transmit the data indicating the determination result to the DRAS 10.

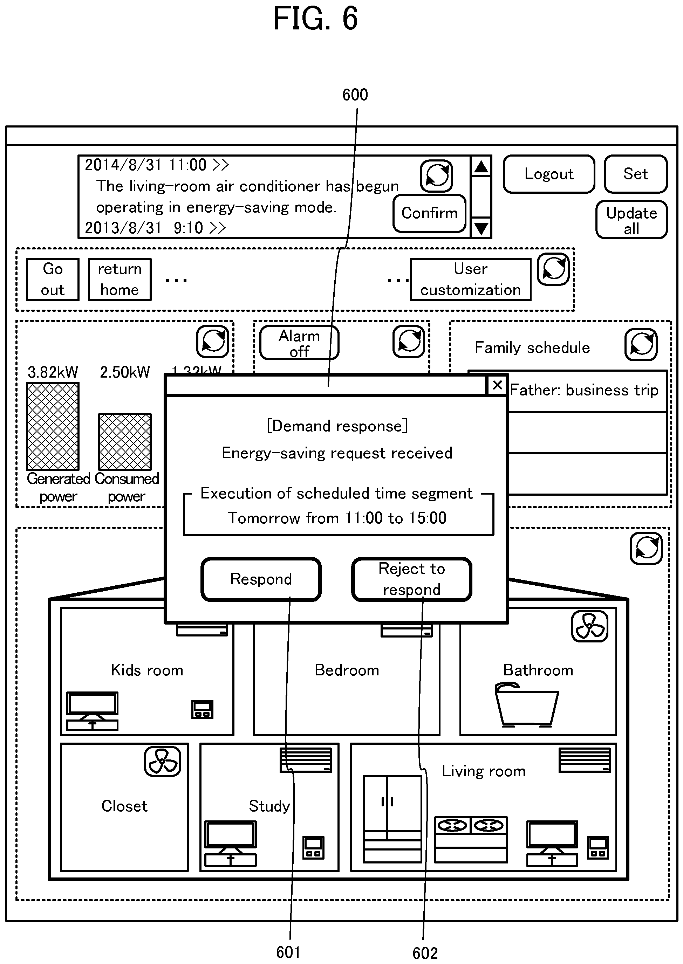

FIG. 6 illustrates another example display of the DR instruction indicating the announcement notification. The control unit 206 of the controller 100 superimposes, in a popped-out manner onto the home screen, advisory information 600 which contains buttons 601, 602 to accept an input that specifies to respond or not to respond to the energy-saving request, and which indicates the DR instruction.

When the button 601 corresponding to a choice to respond to the energy-saving request is operated by the user, the control unit 206 of the controller 100 transmits data indicating the determination result so as to respond to the energy-saving request to the DRAS 10. When the user selects the button 602 corresponding to a choice so as not to respond to the energy-saving request, the control unit 206 of the controller 100 transmits data indicating the determination result so as not to respond to the energy-saving request to the DRAS 10. The control unit 206 of the controller 100 stores the setting to respond or not to respond to the energy-saving request in the storage 205.

When displaying the DR instruction containing the announcement notification, the control unit 206 of the controller 100 may display both the buttons 601, 602 to accept a user input that instructs to respond or not to respond to the energy-saving request, but when the DR instruction containing the execution notification is displayed and the setting to respond to the energy-saving request is made, the control unit 206 may not display buttons 601 and 602, and when the setting not to respond to the energy-saving request is made, the control unit 206 may display only the button 601 corresponding to the choice so as to respond to the energy-saving request. An increase in number of the users responding to the energy-saving request is expectable through this process.

In addition, the control unit 206 of the controller 100 is capable of projecting the power consumption amount of the indoor system, and presenting, to the user, the advisory information indicating a difference between the projection value of the power consumption amount when the user responds to the energy-saving request and the projection value of the power consumption amount when the user does not respond to the energy-saving request, a projected financial benefit to be obtained upon responding to the energy-saving request, a projected environmental benefit to be obtained upon responding to the energy-saving request, and the like, based on the projection result.

More specifically, the control unit 206 of the controller 100 calculates (a) a first projection value for the power consumption amount within a time segment at which the energy saving is requested and projected when the user responds to the energy-saving request, and (b) a second projection value for the power consumption amount when the user does not respond to the energy-saving request, respectively, based on the schedule set by the user, an actual achieved value of the power consumption amount, and the like.

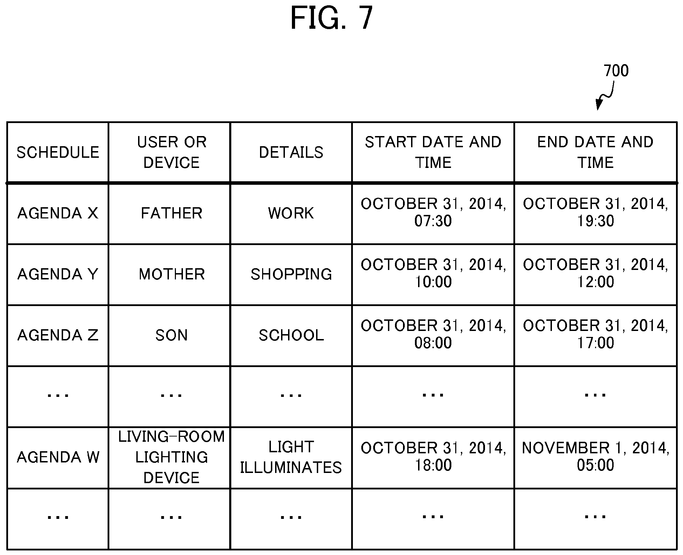

FIG. 7 illustrates example schedule information 700 indicating the schedule set by the user. The control unit 206 of the controller 100 stores, in the storage 205, the identification information of the user or the identification information of the electrical device 180 associated with the schedule, information indicating the details of the schedule, a start date and time of the schedule, and an end date and time of the schedule in association with one another based on the user input. The storage 205 of the controller 100 functions as a schedule storage 405 that stores the schedule information 700.

The control unit 206 of the controller 100 stores, in the storage 205 beforehand, data indicating the association between the user and the electrical device 180, and determines the electrical device 180 associated with the user indicated in the schedule. Next, the control unit 206 of the controller 100 creates an execution plan to control the determined electrical device 180 in accordance with the details of the operation specified in the schedule.

When the electrical device 180 subjected to the operation is directly specified in the schedule, the control unit 206 of the controller 100 creates the execution plan to control the specified electrical device 180 in accordance with the details of the specified operation.

When a part of or all of the time segment indicated in the schedule overlaps with the time segment indicated by the DR instruction, the control unit 206 of the controller 100 creates the execution plan as announced by the user input for the time segment not overlapping the time segment indicated by the DR instruction, and creates the execution plan that changes the input schedule so as to reduce the power consumption amount for the time segment overlapping the time segment indicated by the DR instruction.

Within the time segment (overlapping time segment) that overlaps with the time segment indicated by the DR instruction among all time segments indicated in the schedule, the control unit 206 of the controller 100 creates the execution plan so as to reduce the power consumption amount within the overlapping time segment by deactivating the associated electrical device 180 with the schedule or limiting the available function of the electrical device 180.

When, for example, the electrical device 180 associated with the schedule is a lighting device, the control unit 206 of the controller 100 creates the execution plan to turn off the lighting device or to decrease the brightness thereof within the overlapping time segment. Hence, the power consumption amount of the lighting device is reduced within the overlapping time segment.

When, for example, the electrical device 180 associated with the schedule is a hot water supply system, the control unit 206 of the controller 100 creates the execution plan to boil the water prior to the overlapping time segment, and to maintain the temperature of the hot water or deactivate such a system within the overlapping time segment. Hence, the power consumption amount of the hot water supply system is reduced within the overlapping time segment.

When, for example, the electrical device 180 associated with the schedule is an air conditioner, the control unit 206 of the controller 100 deactivates the air conditioner within the overlapping time segment. Alternatively, the control unit 206 of the controller 100 decreases the blown air volume or changes the target temperature (decreases the target temperature in the case of heating, or increases the target temperature in the case of cooling) within the overlapping time segment. Hence, the power consumption amount of the air conditioner within the overlapping time segment is reduced.

In addition, when the process indicated in the schedule within a predetermined time segment prior to the overlapping time segment is a heating operation, the control unit 206 of the controller 100 may create the execution plan to perform pre-heating, and when such a process is a cooling operation, the control unit 206 may create the execution plan to perform pre-cooling. The pre-cooling (or pre-heating) is an operation method of starting the cooling (or the heating) prior to the time segment indicated in the schedule, of reducing the process load during the time segment indicated in the schedule, and of reducing the power consumption amount within the time segment indicated in the schedule.

The control unit 206 of the controller 100 presets the process that should be executed by each electrical device 180 when the user responds to the energy-saving request beforehand, and creates the execution plan to cause the electrical device 180 to execute the predetermined process within the overlapping time segment.

Alternatively, information indicating the process to be executed by the electrical device 180 when the user responds to the energy-saving request may be stored beforehand, and when the controller 100 gives a notification to respond to the energy-saving request, the electrical device 180 may execute the predetermined process to be executed. In this case, the controller 100 does not need to preset the processes to be executed when the user responds to the energy-saving request for all electrical devices 180, and may simply notify each electrical device 180 of the response to the energy-saving request.

Still further, the electrical device 180 may have two operation modes that are a first operation mode to be applied when the user does not respond to the energy-saving request or there is no energy-saving request, and a second operation mode to be applied when the user responds to the energy-saving request, and the control unit 206 of the controller 100 may instruct the electrical device 180 to operate in the second operation mode when the user responds to the energy-saving request, and may instruct the electrical device 180 to operate in the first operation mode when the user does not respond to the energy-saving request.

The specific process details executed by the electrical device 180 in the first operation mode, and the specific process details executed by the electrical device 180 in the second operation mode are not limited to any particular ones according to the present disclosure, and are optional. However, a setting is made in such a way that the power consumption amount of the electrical device 180 in the second operation mode is less than the power consumption amount of the electrical device 180 in the first operation mode.

When, for example, the electrical device 180 is a lighting device, the brightness of light in the second operation mode is set to be lower than that of the light in the first operation mode.

When, for example, the electrical device 180 is an air conditioner, the blown air volume in the second operation mode is set to be lower than the blown air volume in the first operation mode.

The control unit 206 of the controller 100 may create the execution plan to discharge the stored electric power in the power storing system 160 to the indoor power line within the overlapping time segment. This reduces the amount of electric power to be purchased from the electric power supplier, resulting in a reduction of the electricity billing amount.

The control unit 206 of the controller 100 calculates the first projection value and the second projection value based on the created execution plan.

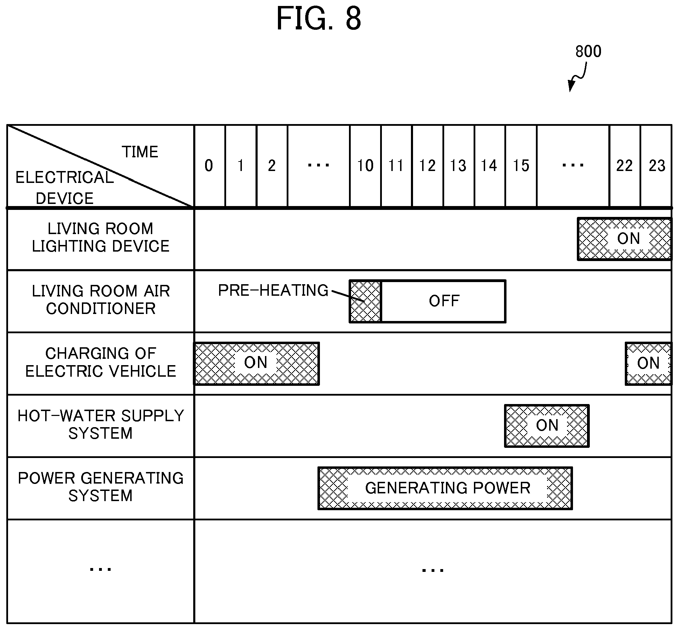

FIG. 8 illustrates an example execution plan 800 of a day created by the control unit 206 of the controller 100. The control unit 206 of the controller 100 determines, for each electrical device 180 to be controlled, whether to activate (ON or OFF), and the activation details (in the case of an air conditioner, the blown air volume, the target temperature, and the like) when the electrical device 180 is to be activated, creates the execution plan 800 reflecting such details, and stores data indicating this execution plan 800 in the storage 205.

The control unit 206 of the controller 100 creates a first execution plan that responds to the energy-saving request, and a second execution plan that does not respond to the energy-saving request based on the schedule information 700. The power consumption amount based on the first execution plan is less than the power consumption amount based on the second execution plan.

The control unit 206 of the controller 100 may create the first execution plan that responds to the energy-saving request, and the second execution plan that does not respond to the energy-saving request regardless of the schedule information 700.

More specifically, when there is no set schedule that overlaps with the energy-saving time segment indicated by the DR instruction, the control unit 206 of the controller 100 creates the execution plan to cause the electrical device 180 to operate in the first operation mode when a direct user control given via the electrical device 180 is detected in a time segment other than the energy-saving time segment indicated by the DR instruction, and to cause the electrical device 180 to operate in the second operation mode that has a power consumption amount that is less than the power consumption amount in the first operation mode when the direct user control to the electrical device 180 is detected in the energy-saving time segment indicated by the DR instruction.

The direct user control means any user instructions to the electrical device 180 regardless of the schedule information 700 upon a user control given via the home screen displayed on the controller 100, or a user control given via the user interface of the electrical device 180.

In addition, even if no schedule is registered and no direct user control is given, the control unit 206 of the controller 100 is still capable of creating the first execution plan to respond to the energy-saving request, and the second execution plan not to respond to the energy-saving request.

That is, when the electrical device 180 is already activated at the time point at which the execution notification or the announcement notification is received from the DRAS 10, the control unit 206 of the controller 100 creates the execution plan that causes the already-activated electrical device 180 to operate so as to reduce the power consumption amount.

When, for example, the air conditioner is in a heating operation at the time point at which the execution notification is received from the DRAS 10, the control unit 206 of the controller 100 creates the first execution plan to set the target temperature for the air conditioner within the energy-saving time segment to be a temperature lowered by a predetermined temperature, or to deactivate the heating operation within the energy-saving time segment. In addition, the control unit 206 of the controller 100 creates the second operation plan to continue the heating operation.

When, for example, the lighting device is turned ON at a first brightness at the time point at which the execution notification is received from the DRAS 10, the control unit 206 of the controller 100 creates the first execution plan to set the lighting device to be a second brightness darker than the first brightness within the energy-saving time segment, or to turn OFF the lighting device within the energy-saving time segment. In addition, the control unit 206 of the controller 100 creates the second execution plan to keep turning ON the lighting device at the first brightness.

After the energy-saving time segment ends, the control unit 206 of the controller 100 may return the setting of the electrical device 180 to the setting prior to the energy-saving time segment.

When the created execution plan and the projected power consumption amount of the electrical device 180 are apparent beforehand, the power consumption amount of the entire indoor system when such a system is controlled in accordance with the created execution plan by the device control system 1 is projectable.

In this embodiment, the control unit 206 of the controller 100 calculates a projected power consumption amount when the indoor system is controlled in accordance with the created execution plan by the device control system 1 based on device status data indicating the operation status records of the electrical device 180, and the like, and power amount data indicating the records of power amount measured by the power measuring device 140, and the like.

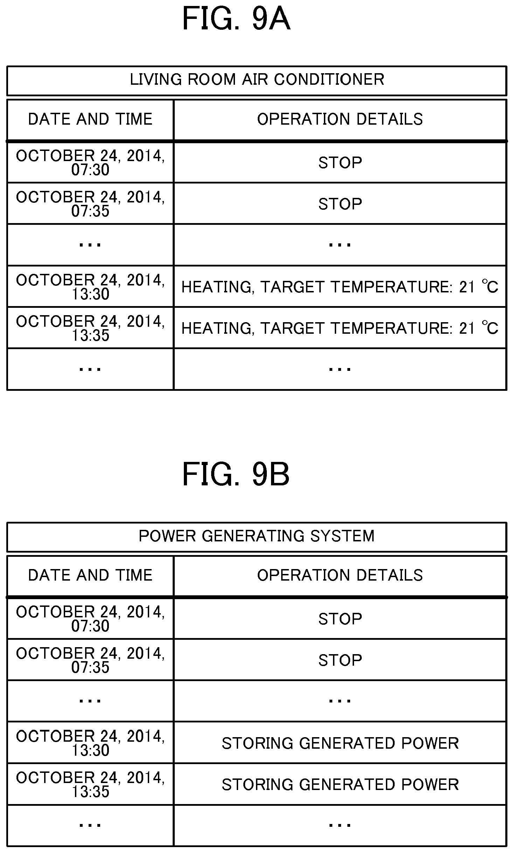

FIG. 9A, FIG. 9B illustrate example device status data indicating the operation status records of the electrical device 180, and the like. The control unit 206 of the controller 100 repeatedly obtains the operation status of the electrical device 180, and the like, and stores the obtained status in the storage 205. The storage 205 accumulates the past operation status records of the electrical device 180, and the like. The storage 205 of the controller 100 functions as a device status storage 406 that stores the device status data.

The timing at which the controller 100 obtains the operation status of the electrical device 180, and the like, is optional, and for example, the operation status may be obtained periodically at a predetermined time cycle, or the operation status may be obtained only when there is a change in operation status of the electrical device 180, and the like.

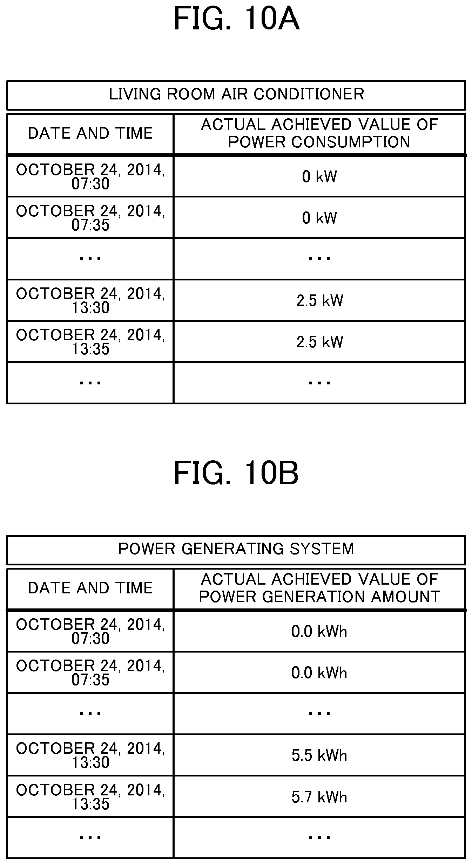

FIG. 10A, FIG. 10B illustrate example measurement data indicating the records of the power amount measured by the power measuring device 140, and the like. The control unit 206 of the controller 100 repeatedly obtains the measurement data indicating the power amount measured by the power measuring device 140, and the like, at the predetermined time cycle, and stores this data in the storage 205. The storage 205 accumulates the records of actual measured value of the power consumption amount of the electrical device 180, actual measured value of the power generation amount, and actual measured value of the stored power amount, and the like. The storage 205 of the controller 100 functions as a measured value storage 407 that stores the measurement data.

Upon receiving the DR instruction, the control unit 206 of the controller 100 obtains, from the device status data exemplified in FIG. 9A, FIG. 9B, and the measurement data exemplified in FIG. 10A, FIG. 10B, the past achieved operation of the electrical device 180 at the same clock time as the clock time indicated by the DR instruction or within the time slot covering the clock time indicated by the DR instruction. Next, the control unit 206 of the controller 100 calculates the estimated value of the power consumption amount to be consumed by the electrical device 180 in accordance with the created execution plan based on the obtained device status data and measurement data. That is, a projection value for the future power consumption amount is calculated from the past actual measured value of the power consumption amount.

For example, the control unit 206 of the controller 100 handles, as the estimated value of the power consumption amount of the electrical device 180 at the clock time indicated by the DR instruction, the actual measured value of the past power consumption amount of the electrical device 180 at the same clock time as the clock time indicated by the DR instruction, or within the time slot covering the clock time indicated by the DR instruction.

The control unit 206 of the controller 100 may handle, as the estimated value of the power consumption amount of the electrical device 180 at the clock time indicated by the DR instruction, the actual measured value of the past power consumption amount of the electrical device 180 at the same clock time as the clock time indicated by the DR instruction, or within a time slot covering the clock time indicated by the DR instruction, and the clock time or the time slot having the same weather condition. In this case, the control unit 206 of the controller 100 obtains, in sequence, meteorological data, such as the weather, the temperature, and the humidity, from the server (not illustrated) over the communication network 50, stores the obtained data in the storage 205, and calculates the estimated value of the power consumption amount using the stored meteorological data.

When there are multiple actual measured values of the past corresponding power consumption amount of the electrical device 180, the control unit 206 of the controller 100 handles the actual measured value (latest actual measured value) closest to the clock time indicated by the DR instruction among those values as the estimated value of the power consumption amount of the electrical device 180 at the clock time indicated by the DR instruction.

Alternatively, the control unit 206 of the controller 100 may handle, as the estimated value of the power consumption amount of the electrical device 180 at the clock time indicated by the DR instruction, the value obtained through a statistical process, such as an average value, mode value, center value, or maximum value of the actual measured values of the past corresponding power consumption amount of the electrical device 180.

The control unit 206 of the controller 100 calculates both the projection value (first projection value) of the power consumption amount based on the first execution plan so as to respond to the energy-saving request, and the projection value (second projection value) of the power consumption amount based on the second execution plan so as not to respond to the energy-saving request.

As described above, the control unit 206 of the controller 100 functions as a projector 408 that calculates the projection value of the power consumption amount (the projection value of the load) based on the created execution plan.

In addition, the control unit 206 of the controller 100 calculates (c) an expected electricity billing amount to be paid by the user based on the first projection value, and (d) an expected electricity billing amount to be paid by the user based on the second projection value in view of billing data, respectively, on the basis of the created execution plan and the electricity billing rate to be applied.

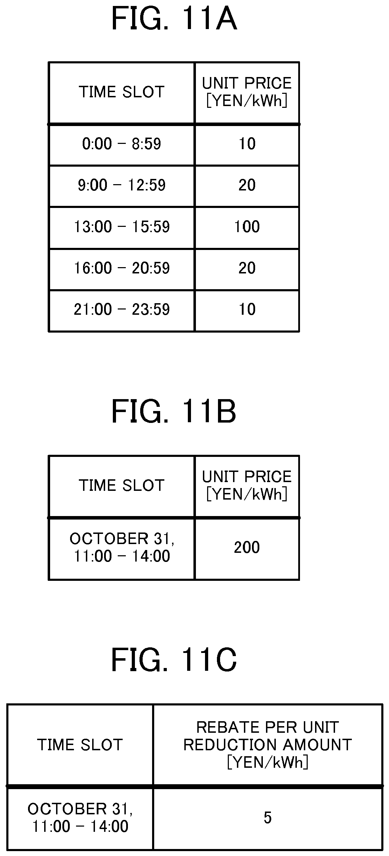

FIG. 11A illustrates example billing data indicating the electricity billing rate to be presented to the user from the electric power supplier. The electricity billing rate is set beforehand for each time slot. The control unit 206 of the controller 100 obtains data indicating the electricity billing rate from the DRAS 10, and stores this data in the storage 205.

When the electricity billing rate to be applied changes upon responding to the energy-saving request, the control unit 206 of the controller 100 obtains, from the DRAS 10 after receiving the DR instruction therefrom, data indicating the newest electricity billing rate to be applied.

FIG. 11B illustrates example billing data indicating the electricity billing rate to be presented to the user from the electric power supplier when the energy saving is requested by the DR instruction under the CPP program. The control unit 206 of the controller 100 applies, to the time slot indicated by the DR instruction within the first execution plan so as to respond to the energy-saving request, the special electricity billing rate for DR illustrated in FIG. 11B, and applies the normal electricity billing rates illustrated in FIG. 11A within the other time slots, thereby calculating the electricity billing amount based on the first projection value.

As for the electricity billing amount based on the second projection value, the control unit 206 of the controller 100 applies the normal electricity billing rate illustrated in FIG. 11A to all time slots indicated by the second execution plan so as not to respond to the energy saving, thereby calculating the electricity billing amount.

FIG. 11C illustrates example billing data indicating the rebate of the electricity billing amount to be presented to the user from the electric power supplier when the energy saving is requested by the DR instruction under the PTR program. The control unit 206 of the controller 100 applies the normal electricity billing rates illustrated in FIG. 11A to all time slots indicated by the first execution plan, and calculates the electricity billing amount based on the second projection value. In addition, the control unit 206 of the controller 100 sets the electricity billing amount based on the first projection value which is obtained by subtracting the rebate illustrated in FIG. 11C from the calculated electricity billing amount based on the second projection value.

The difference between the calculated electricity billing amount based on the first projection value and the calculated electricity billing amount based on the second projection value indicates an expected financial benefit to be obtained by the user upon responding to the energy-saving request.

In addition, the control unit 206 of the controller 100 calculates a projected impact to be given to the environment when the user responds to the energy-saving request, and a projected impact to be given to the environment when the user does not respond to the energy-saving request based on the calculated first projection value and second projection value as described above.

The projected impact to be given to the environment is an amount of carbon dioxide ($CO_2$) discharged by the electric power supplier to generate power equivalent to the power consumption amount. In the case of thermal power generation that burns heavy oil and natural gas to rotate a turbine, carbon dioxide is discharged. The control unit 206 of the controller 100 multiplies the rough standard value of the $CO_2$ amount to be discharged per a unit power generation amount by the power consumption amount, thereby estimating the amount of $CO_2$ to be discharged. The calculated amount of $CO_2$ to be discharged indicates an expected environmental benefit to be obtained upon responding to the energy-saving request.

The control unit 206 of the controller 100 functions as a creator 409 that creates the advisory information containing the information indicating the financial benefit and the environmental benefit to be obtained upon responding to the energy-saving request.

The control unit 206 of the controller 100 displays, on the display 251, the advisory information containing at least one of (a) the first projection value for the power consumption amount when the user responds to the energy-saving request, (b) the second projection value for the power consumption amount when the user does not respond to the energy-saving request, (c) the electricity billing amount based on the first projection value, (d) the electricity billing amount based on the second projection value, and (e) the financial benefit and the environmental benefit to be obtained upon responding to the energy-saving request, all calculated as described above, thereby presenting the advisory information to the user. The control unit 206 of the controller 100 and the image processor 202 work together to function as a presenter 410 that presents the advisory information to the user.

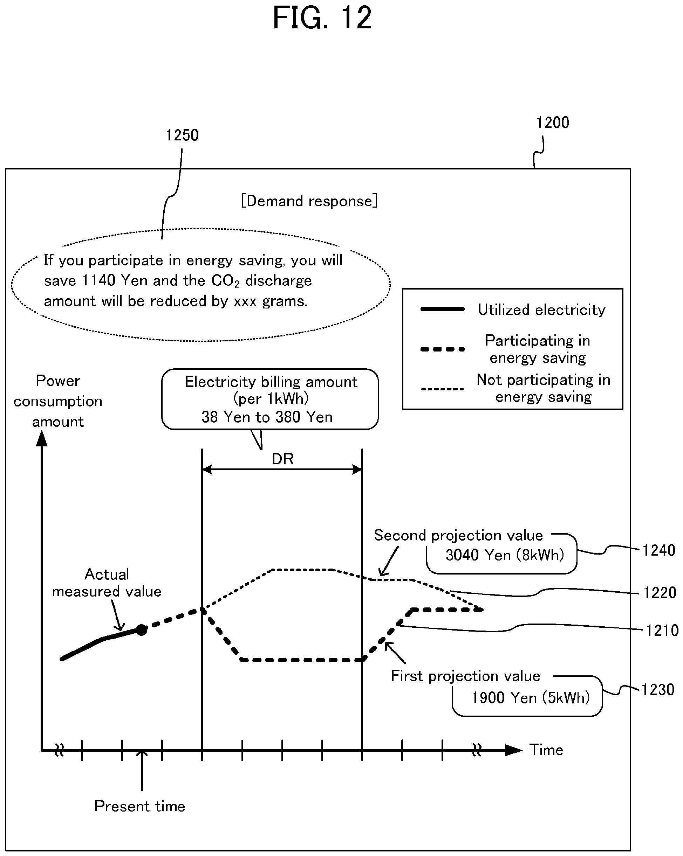

FIG. 12 illustrates example advisory information 1200 to be presented to the user prior to the energy-saving time segment indicated by the DR. This advisory information 1200 contains a first projection value 1210, a second projection value 1220, an electricity billing amount 1230 based on the first projection value 1210, an electricity billing amount 1240 based on the second projection value 1220, and a guidance 1250 indicating the financial benefit and the environmental benefit.

Upon receiving the announcement notification, the control unit 206 of the controller 100 displays, in addition to the advisory information 500 illustrated in FIG. 5, or instead of the advisory information 500, the advisory information 1200 illustrated in FIG. 12. Alternatively, upon receiving the announcement notification, the control unit 206 of the controller 100 displays, in addition to the advisory information 600 illustrated in FIG. 6 or instead of the advisory information 600, the advisory information 1200 illustrated in FIG. 12.

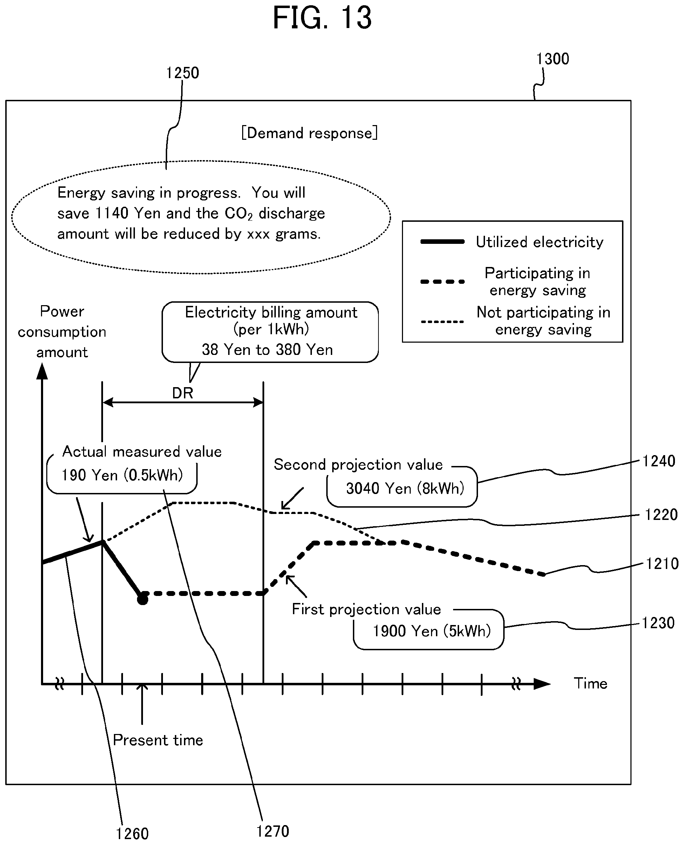

FIG. 13 illustrates example advisory information 1300 to be presented during the energy-saving time segment indicated by the DR instruction to the user who responds to the energy-saving request. This advisory information 1300 contains the first projection value 1210, the second projection value 1220, the electricity billing amount 1230 based on the first projection value 1210, the electricity billing amount 1240 based on the second projection value 1220, the guidance 1250 indicating the financial benefit and the environmental benefit, an actual measured value 1260 of the power consumption amount, and an electricity billing amount 1270 based on the actual measured value 1260.

Upon receiving the execution notification, the control unit 206 of the controller 100 displays advisory information 1300 when the energy-saving time segment indicated by the DR instruction has started. The control unit 206 of the controller 100 updates the advisory information 1300 as appropriate.

When the user gives an instruction to respond to the energy-saving request, the control unit 206 of the controller 100 controls the electricity device 180, and the like, based on the first execution plan so as to respond to the energy-saving request. The control unit 206 of the controller 100 functions as a device controller 411 that controls the electrical device 180, and the like, based on the created execution plan. When the user gives an instruction so as not to respond to the energy-saving request, the control unit 206 of the controller 100 controls the electricity device 180, and the like, based on the second execution plan so as not to respond to the energy-saving request.

Within the energy-saving time segment indicated by the DR instruction, the control unit 206 of the controller 100 updates the advisory information 1300 as appropriate, and displays the updated information. The actual measured value 1260, and the electricity billing amount 1270 based on the actual measured value 1260 are updated in a real-time manner.

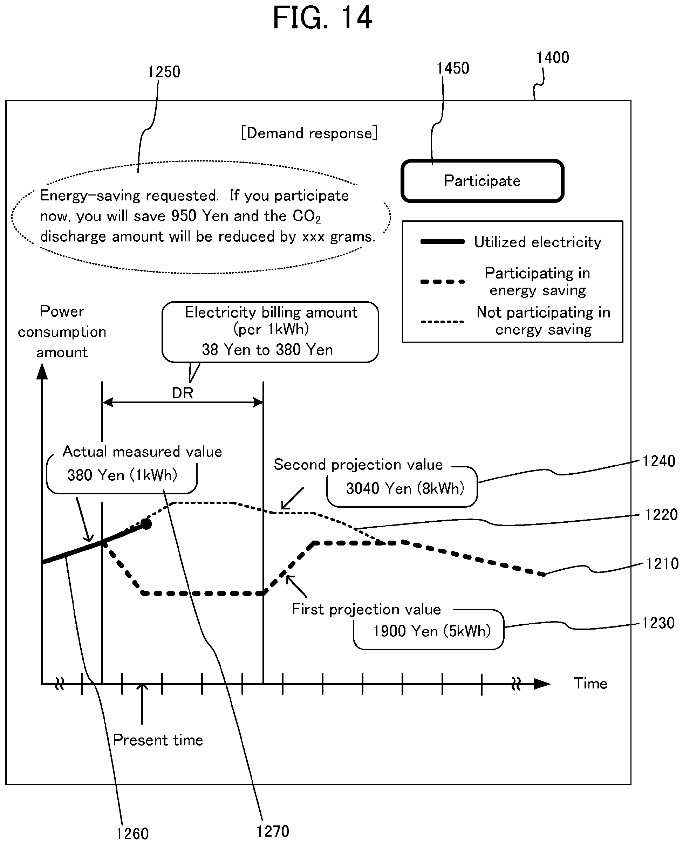

FIG. 14 illustrates example advisory information 1400 to be presented to the user who is not responding to the energy-saving request within the energy-saving time segment indicated by the DR instruction. This advisory information 1400 contains the first projection value 1210, the second projection value 1220, the electricity billing amount 1230 based on the first projection value 1210, the electricity billing amount 1240 based on the second projection value 1220, the guidance 1250 indicating the financial benefit and the environmental benefit, the actual measured value 1260 of the power consumption amount, the electricity billing amount 1270 based on the actual measured amount 1260, and a button 1450 that accepts a user instruction to change from the setting not to respond to the energy-saving request to the setting to respond to the energy-saving request.

When the button 1450 is selected by the user, the control unit 206 of the controller 100 changes the setting to the setting to respond to the energy-saving request, starts control of the electrical device 180 based on the first execution plan to respond to the energy-saving request while the energy-saving time segment is already in progress, and notifies the DRAS 10 of the response to the energy-saving request while the energy-saving time segment is already in progress.

The electricity billing rate to be applied, the amount of money to be returned, and the like, may vary depending on whether the user responds to the energy-saving request from the beginning or the user responds to the energy-saving request when the energy-saving time segment is already in progress.

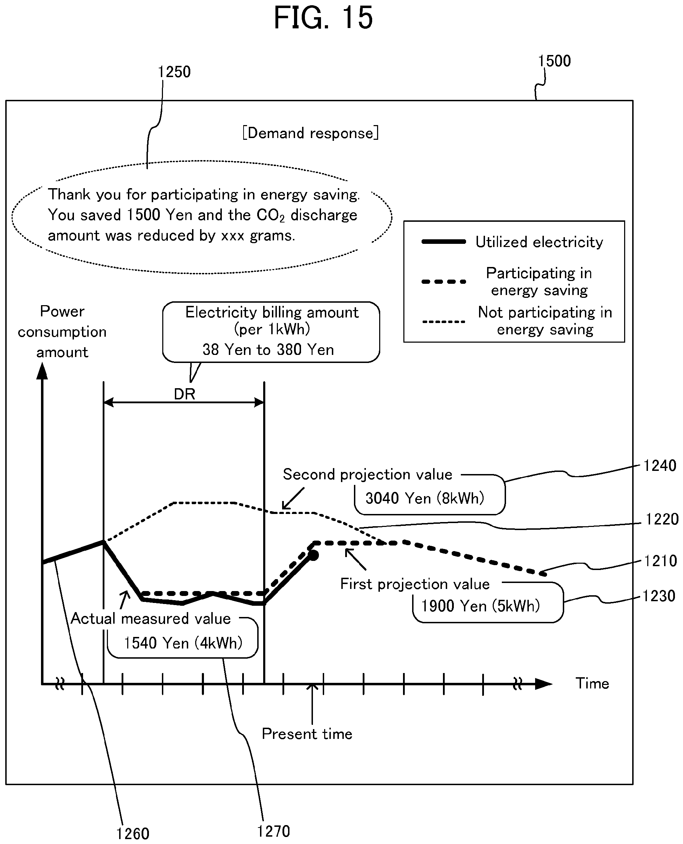

FIG. 15 illustrates example advisory information 1500 to be presented to the user after the energy-saving time segment indicated by the DR instruction ends, that is, after the energy-saving request ends. This advisory information 1500 contains the first projection value 1210, the second projection value 1220, the electricity billing amount 1230 based on the first projection value 1210, the electricity billing amount 1240 based on the second projection value 1220, the guidance 1250 indicating the financial benefit and the environmental benefit, the actual measured value 1260 of the power consumption amount, and the electricity billing amount 1270 based on the actual measured value 1260.

When the power consumption amount of the indoor system is reduceable by discharging electric power stored in the power storing system 160 and/or in the electric vehicle 170, the control unit 206 of the controller 100 reflects the costs to store, in the power storing system 160 and/or in the electric vehicle 170, the electric power by what corresponds to the discharging amount on the actual measured value 1260 of the power consumption amount and on the electricity billing amount 1270 based on the actual measured value 1260.

When, for example, the user responds to the energy-saving request, the electricity billing amount 1230 based on the first projection value 1210 is "1900 YEN", and the electricity billing amount 1240 based on the second projection value 1220 is "3040 YEN", the difference therebetween is "1140 YEN". When, however, the costs needed to store the electric power corresponding to the discharging amount is "100 YEN", an appropriate financial benefit obtainable for the user upon responding to the energy-saving request is "1040 YEN".

Next, a detailed description is given of the flow of the processes executed by the device control system 1.

(Initial setting process)

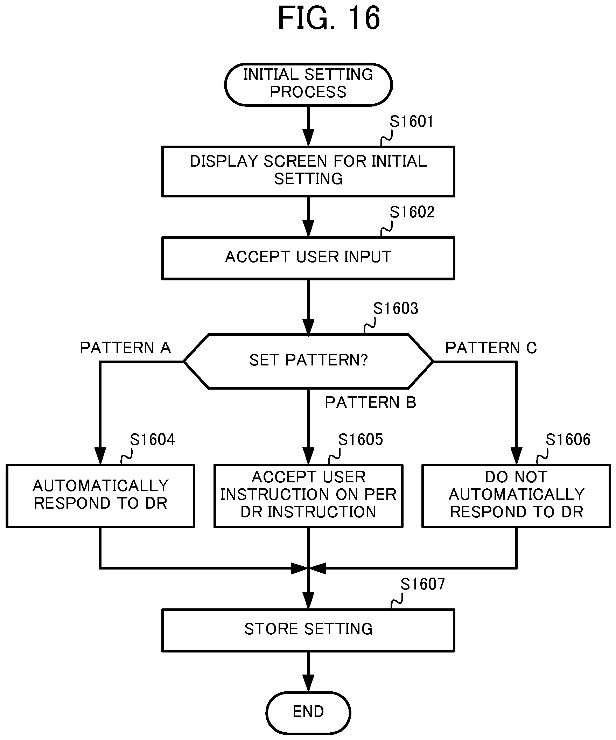

FIG. 16 is a flowchart for illustrating an initial setting process.

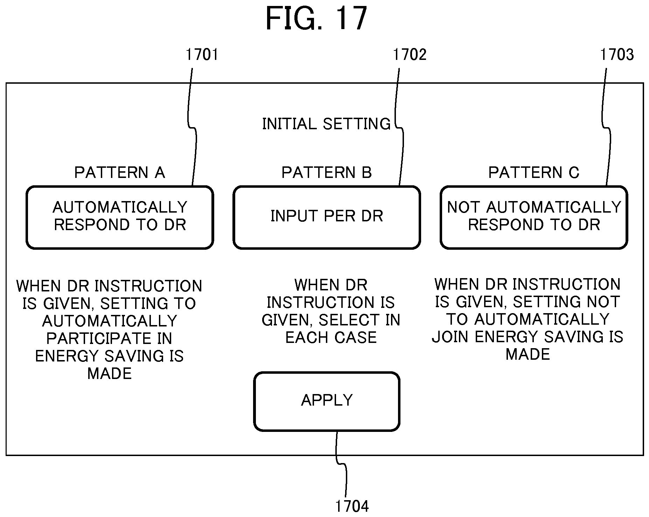

As illustrated in FIG. 17, the control unit 206 of the controller 100 first displays (step S1601) a screen for the initial setting on the display 251, and then accepts (step S1602) a user input.

There are three operation patterns as follows which indicate the operation when the DR instruction is received and which are settable to the controller 100.

(Pattern A) The controller 100 automatically makes the setting to respond to the energy-saving request upon receiving the DR instruction, and notifies the DRAS 10 of such a setting.
(Pattern B) The controller 100 waits for the user instruction every time the DR instruction is received, accepts the user instruction, and notifies the DRAS 10 of the setting to respond to the energy-saving request or not to respond to the energy-saving request.
(Pattern C) The controller 100 automatically makes the setting so as not to respond to the energy-saving request upon receiving the DR instruction, and notifies the DRAS 10 of such a setting.

The screen illustrated in FIG. 17 contains buttons 1701, 1702, and 1703 to accept a user input to select any one of the three patterns, and a button 1704 to apply the selection result and to notify the DRAS 10 of the selection result.

The control unit 206 of the controller 100 determines (step S1603) what pattern the setting is made among the pattern A, the pattern B, and the pattern C based on the accepted user input in step S1602.

That is, when the button 1704 is selected by the user after selection of the button 1701 by the user, the control unit 206 of the controller 100 makes the setting (step S1604) for the operation pattern A to automatically respond to the energy-saving request upon receiving the DR instruction, and stores (step S1607) data indicating this setting in the storage 205. In the pattern A, the control unit 206 of the controller 100 automatically notifies the DRAS 10 of the response to the energy-saving request upon receiving the DR instruction.

When the button 1704 is selected by the user after selection of the button 1702 by the user, the control unit 206 of the controller 100 makes the setting (step S1605) for the operation pattern B to wait for a user input upon receiving the DR instruction, and stores (step S1607) data indicating this setting in the storage 205. In the pattern B, the control unit 206 of the controller 100 accepts a user selection indicating to respond or not to respond to the energy-saving request upon receiving the DR instruction, and notifies the DRAS 10 of the data indicating the selection result.

When the button 1704 is selected by the user after selection of the button 1703 by the user, the control unit 206 of the controller 100 makes the setting (step S1606) for the operation pattern C not to automatically respond to the energy-saving request upon receiving the DR instruction, and stores (step S1607) data indicating this setting in the storage 205. In the pattern C, the control unit 206 of the controller 100 automatically notifies the DRAS 10 of the rejection of response to the energy-saving request upon receiving the DR instruction.

(Device control process)

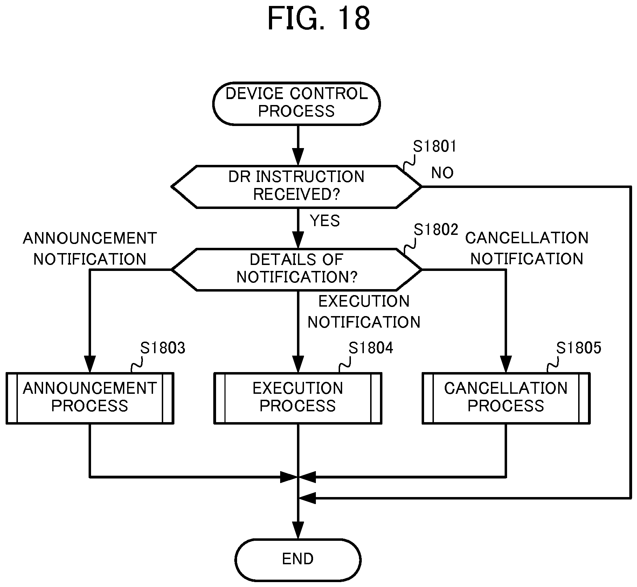

Next, a description is given of a flow of a device control process executed by the controller 100 after receiving the DR instruction from the DRAS 10 with reference to a flowchart that is FIG. 18.

First, the control unit 206 of the controller 100 determines (step S1801) whether the DR instruction is received from the DRAS 10.

When the DR instruction is not received from the DRAS 10 (step S1801: NO), the controller 100 ends the device control process.

When the DR instruction is received from the DRAS 10 (step S1801: YES), the control unit 206 of the controller 100 determines (step S1802) the details of the received DR instruction. That is, the control unit 206 of the controller 100 determines whether the received DR instruction is the announcement notification, the execution notification, or the cancellation notification.

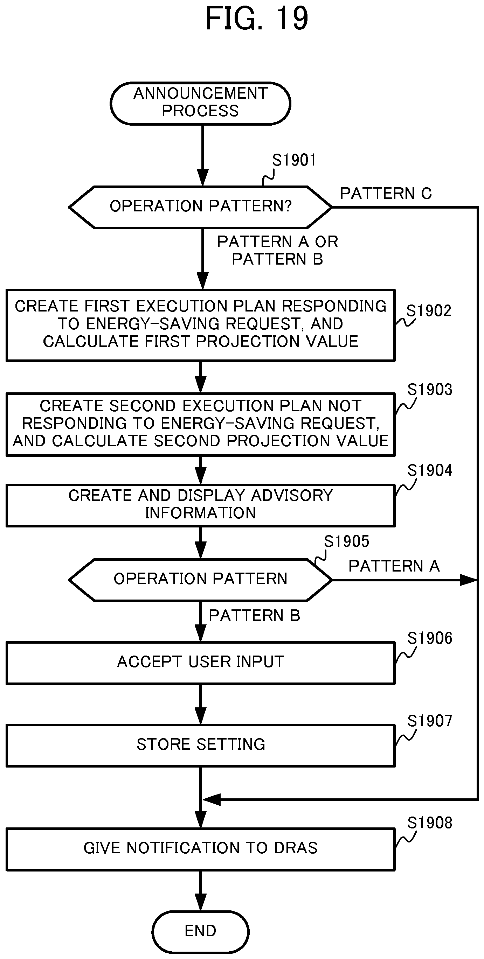

When the details of the notification indicated by the DR instruction is the announcement notification, the control unit 206 of the controller 100 starts an announcement process (step S1803) illustrated in FIG. 19.

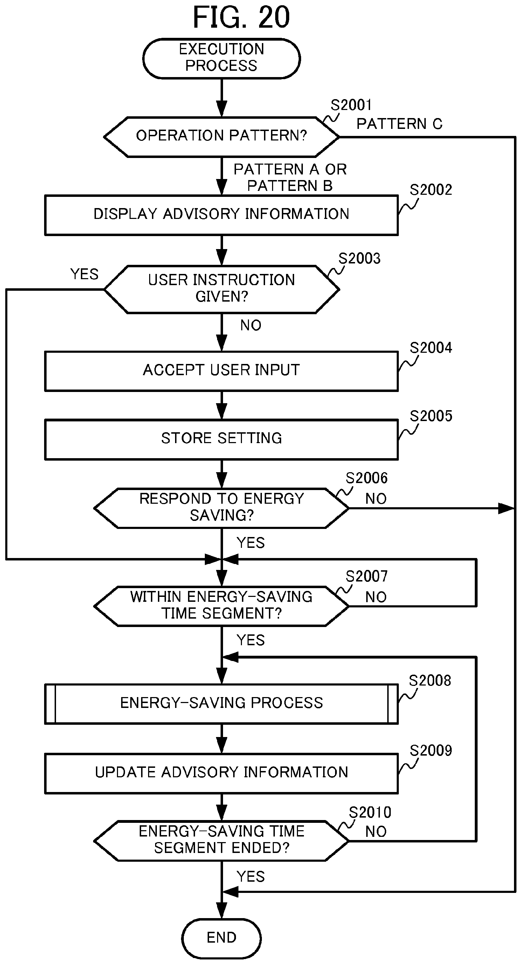

When the details of the notification indicated by the DR instruction is the execution notification, the control unit 206 of the controller 100 starts an execution process (step S1804) illustrated in FIG. 20.

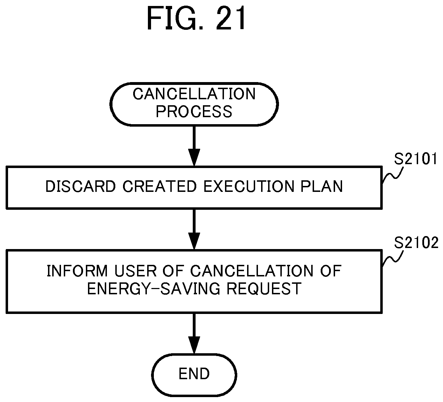

When the details of the notification indicated by the DR instruction is the cancellation notification, the control unit 206 of the controller 100 starts a cancellation process (step S1805) illustrated in FIG. 21.

(Announcement process)

Next, a description is given of a flow of the announcement process when the announcement notification is received with reference to the flowchart that is FIG. 19.

First, the control unit 206 of the controller 100 determines (step S1901) whether the set operation pattern is the pattern A, the pattern B, or the pattern C.

When either the pattern A or the pattern B is set, the control unit 206 of the controller 100 creates the first execution plan so as to respond to the energy-saving request, and calculates the first projection value for the power consumption when the electrical device 180, and the like, is controlled based on the first execution plan (step S1902).

In addition, the control unit 206 of the controller 100 creates the second execution plan so as not to respond to the energy-saving request, and calculates the second projection value for the power consumption amount when the electrical device 180, and the like, is controlled based on the second execution plan (step S1903).

Subsequently, the control unit 206 of the controller 100 creates the advisory information containing at least one of the following: (a) the first projection value for the power consumption amount when the user responds to the energy-saving request; (b) the second projection value for the power consumption amount when the user does not respond to the energy-saving request; (c) the electricity billing amount based on the first projection value; (d) the electricity billing amount based on the second projection value; and (e) the financial benefit and the environmental benefit, and displays such advisory information on the display 251 (step S1904).

The control unit 206 of the controller 100 may obtain the newest billing data from the server managed by the electric power supplier in step S1904, or may obtain the newest billing data beforehand prior to the start of the announcement process.

Next, the control unit 206 of the controller 100 determines (step S1905) whether the set operation pattern is the pattern A or the pattern B.

When the set operation pattern is the pattern B, the control unit 206 of the controller 100 accepts (step S1906) a user input indicating to respond or not to respond to the energy-saving request.

When accepting the user input indicating to respond to the energy-saving request, the control unit 206 of the controller 100 stores, in the storage 205, the setting to control the electrical device 180, and the like, based on the first execution plan, and when accepting the user input indicating not to respond to the energy-saving request, the control unit 206 stores, in the storage 205, the setting to control the electrical device 180, and the like, based on the second execution plan (step S1907).

Next, the control unit 206 of the controller 100 notifies (step S1908) the DRAS 10 of the response to the energy-saving request or the rejection of response thereto.

In step S1901, when the set operation pattern is the pattern C, the control unit 206 of the controller 100 notifies (step S1908) the DRAS 10 of the rejection of response to the energy-saving request.

In step S1905, when the set operation pattern is the pattern A, the control unit 206 of the controller 100 notifies (step S1908) the DRAS 10 of the response to the energy-saving request.

(Execution process)

Next, a description is given of a flow of the execution process when the execution notification is received with reference to the flowchart that is FIG. 20.

First, the control unit 206 of the controller 100 determines (step S2001) whether the set operation pattern is the pattern A, B, or C.

When the pattern C is set, the control unit 206 of the controller 100 ends the execution process.

When either the pattern A or the pattern B is set, the control unit 206 of the controller 100 displays (step S2002) the created advisory information in step S1904 of the announcement process on the display 251.

The control unit 206 of the controller 100 may obtain the newest billing data in step S2002 from the server managed by the electric power supplier, may re-calculate the electricity billing amount based on the first projection value, the electricity billing amount based on the second projection value, and the financial benefit to be obtained upon responding to the energy-saving request, and may re-create and display the advisory information reflecting those pieces of information.

Next, in the case that the set operation pattern is pattern B, the control unit 206 of the controller 100 determines (step S2003) whether there is a user input indicating to respond or not to respond to the energy-saving request.

When there is a user input (step S2003: YES), the control unit 206 of the controller 100 advances the process to step S2007. When the set operation pattern is pattern A, a determination is made that there is a user input.

When there is no user input thus far (step S2003: NO), the control unit 206 of the controller 100 accepts (step S2004) the user input indicating to respond or not to respond to the energy-saving request.

When receiving the user input to respond to the energy-saving request, the control unit 206 of the controller 100 stores, in the storage 205, the setting to control the electrical device 180, and the like, based on the first execution plan, and when receiving the user input so as not to respond to the energy-saving request, the control unit 206 stores, in the storage 205, the setting to control the electrical device 180, and the like, based on the second execution plan (step S2005).

The control unit 206 of the controller 100 determines (step S2006) to respond or not to respond to the energy-saving request.

When not responding to the energy-saving request (step S2006: NO), the control unit 206 of the controller 100 ends the execution process.

When responding to the energy-saving request (step S2006: YES), the control unit 206 of the controller 100 obtains a system clock time from a Real Time Clock (RTC), and determines (step S2007) whether the present time is within the energy-saving time segment specified by the execution notification.

When the present time is not within the energy-saving time segment specified by the execution notification (step S2007: NO), the control unit 206 of the controller 100 stands by until the energy-saving time segment specified by the execution notification arrives.

When the present time is within the energy-saving time segment specified by the execution notification (step S2007: YES), the control unit 206 of the controller 100 starts an energy-saving process (step S2008).

The control unit 206 of the controller 100 updates (step S2009) the displayed advisory information in step S2002 to the newest information. For example, the control unit 206 obtains and displays the actual measured value of the power consumption amount, and calculates and displays the electricity billing amount to be paid by the user within the energy-saving time segment based on the obtained actual measured value of the power consumption amount.

The control unit 206 of the controller 100 obtains the system clock time from the RTC, and determines (step S2010) whether the energy-saving time segment specified by the execution notification has ended.

When the energy-saving time segment has not ended yet (step S2010: NO), the control unit 206 of the controller 100 repeats the processes from the step S2008 to step S2010.

When the energy-saving time segment has ended (step S2010: YES), as illustrated in FIG. 15, the control unit 206 of the controller 100 displays the eventual financial benefit and environmental benefit to be obtained upon responding to the energy-saving request, and ends the execution process.

(Cancellation process)

Next, a description is given of a flow of the cancellation process when the cancellation notification is received with reference to the flowchart that is FIG. 21.

Upon receiving the cancellation notification, the control unit 206 of the controller 100 discards (step S2101) the created execution plan in step S1902 of the announcement process and in step S1903 thereof.

The control unit 206 of the controller 100 informs (step S2102) the user of the cancellation of the energy-saving request by displaying such information on the display 251.

(Energy-saving process)

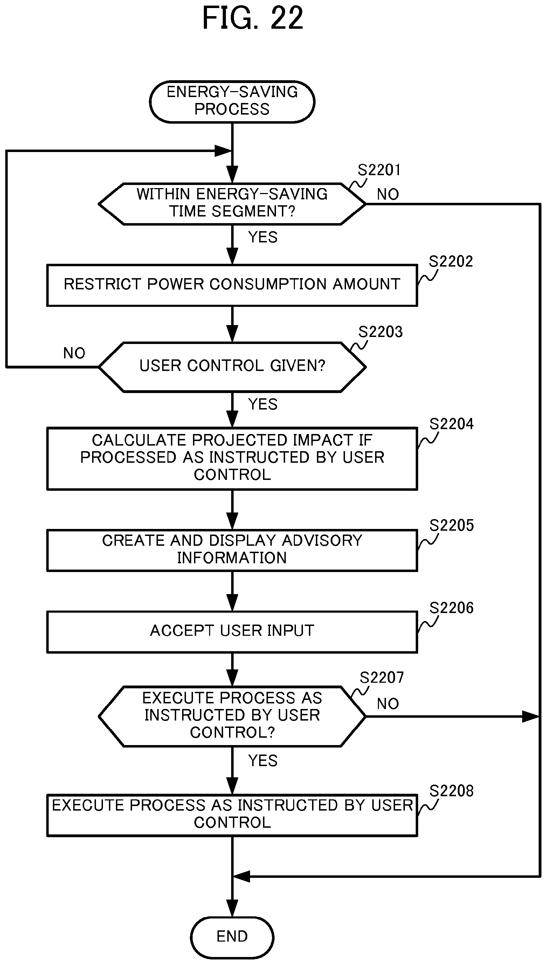

Next, a description is given of a flow of the energy-saving process to be executed when the user responds to the energy-saving request with reference to the flowchart that is FIG. 22.

First, the control unit 206 of the controller 100 determines (step S2201) whether the present time is within the energy-saving time segment specified by the execution notification based on the obtained system clock time from the RTC.

When the present time is not within the energy-saving time segment (step S2201: NO), the control unit 206 of the controller 100 ends the energy-saving process. In this case, when there is a direct user control to the electrical device 180, the control unit 206 of the controller 100 causes the electrical device 180 to operate as instructed by the user control.

When the present time is within the energy-saving time segment (step S2201: YES), the control unit 206 of the controller 100 causes the electrical device 180 to operate so as to restrict the power consumption amount. For example, the control unit 206 of the controller 100 suppresses the power consumption amount by decreasing the brightness of the lighting device, or by decreasing the blown air volume of the air conditioner.

Next, the control unit 206 of the controller 100 determines (step S2203) whether there is a direct user control to the electrical device 180.

When there is no direct user control to the electrical device 180 (step S2203: NO), the process returns to step S2201. In this case, the operation of the electrical device having the power consumption amount restricted continues.

When there is the direct user control to the electrical device 180 (step S2203: YES), the control unit 206 of the controller 100 calculates (step S2204) a projected effect to be obtained if the process is executed as instructed by the direct user control.

When, for example, the electrical device 180 is the air conditioner, and the user control is given to start heating at the set target temperature within the energy-saving time segment, the control unit 206 of the controller 100 calculates, for example, a projected power amount to be consumed if the heating starts at the set target temperature, the electricity billing amount equivalent to the projected power amount, and an effect to the environment upon the start of heating at the set target temperature.

The control unit 206 of the controller 100 creates the advisory information based on the calculation result in the step S2204, and displays the advisory information on the display 251 (step S2205).

The control unit 206 of the controller 100 accepts (step S2206) a user input indicating whether to execute the process as instructed by the direct user control in the step S2203.

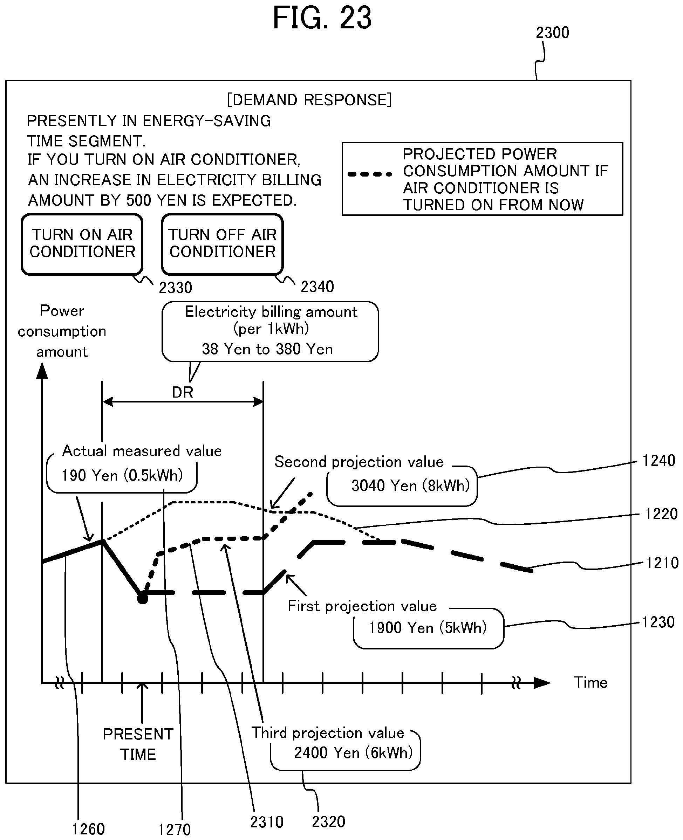

FIG. 23 illustrates an example display of a screen which is displayed on the display 251 when the direct user control is detected within the energy-saving time segment, and which contains advisory information 2300 prompting the user for confirmation. The advisory information 2300 contains an estimated value (third estimation value) 2310 of the power consumption amount of the indoor system estimated as being consumed when the electrical device 180 starts the operation from the present time, an electricity billing amount 2320 to be paid by the user and calculated based on the third estimation value, a button 2330 associated with the instruction to cause the electrical device 180 to operate as instructed by the direct user control, and a button 2340 associated with an instruction to cancel the direct user control.

If the control to suppress the power consumption amount in response to the energy-saving request is being given, the control unit 206 of the controller 100 obtains the third estimation value by adding, to the first estimation value indicating the calculated power consumption amount based on the first execution plan responding to the energy-saving request, the estimated value of the projected power consumption amount to be consumed by the electrical device 180 when such an electrical device 180 operates as instructed by the direct user control.

When the control not responding to the energy-saving request is being given, the control unit 206 of the controller 100 obtains the third estimation value by adding, to the second estimation value indicating the calculated power consumption amount based on the second execution plan not responding to the energy-saving request, the estimated value of the projected power consumption amount to be consumed by the electrical device 180 when such an electrical device 180 operates as instructed by the direct user control.

The control unit 206 of the controller 100 calculates and displays the financial difference or the environmental difference between a case in which the process is executed as instructed by the direct user control, and a case in which the process is not executed as instructed by the direct user control.

The control unit 206 of the controller 100 determines (step S2207) whether to execute the process as instructed by the direct user control.

When the user selects the button 2330, the control unit 206 of the controller 100 determines (step S2207: YES) to execute the process as instructed by the direct user control, and causes the electrical device 180 to operate as instructed by the direct user control (step S2208).

When the user selects the button 2340, the control unit 206 of the controller 100 determines (step S2207: NO) not to execute the process as instructed by the direct user control, and cancels the instruction corresponding to the direct user control. The electrical device 180 maintains the operation that suppresses the power consumption amount.

According to this embodiment, the benefits derived from responding to the energy-saving request is presented to the user in an easy-to-understand way, while at the same time, the energy-saving accomplishment is increased. The device control system 1 presents, to the user in an easy-to-understand way, the first estimation value of the power consumption amount based on the first execution plan so as to respond to the energy-saving request, the electricity billing amount calculated based on the first estimation value, the second estimation value of the power consumption amount based on the second execution plan so as not to respond to the energy-saving request, the electricity billing amount calculated based on the second estimation value, and the financial benefit and the environmental benefit derived from responding to the energy-saving request. Hence, the user's positive response to the energy-saving request is expected.

Upon receiving the announcement notification indicating the energy-saving request, the controller 100 calculates the first estimation value, the electricity billing amount based on the first estimation value, the second estimation value, the electricity billing amount based on the second estimation value, and the financial benefit and the environmental benefit derived from responding to the energy-saving request, respectively, and presents those pieces of information to the user in an easy-to-understand way. This enables the user to determine to respond or not to respond to the energy-saving request in advance before the energy-saving time segment arrives.

After the execution notification indicating the energy-saving request is received, when the energy-saving time segment starts, the controller 100 re-calculates the first estimation value, the electricity billing amount based on the first estimation value, the second estimation value, the electricity billing amount based on the second estimation value, and the financial benefit and the environmental benefit derived from responding to the energy-saving request, updates the advisory information as appropriate, and presents such updated information to the user in an easy-to-understand way. This enables the user to understand the benefits derived from responding to the energy saving within the energy-saving time segment in a real-time manner, and thus an increase in the user's attention to the energy saving is expected.

When the direct user control to the electrical device 180 is detected within the energy-saving time segment, the device control system 1 confirms with the user whether to operate the electrical device 180 truly in accordance with the user's instruction instead of immediately causing the electrical device 180 to operate in accordance therewith. The device control system 1 lets the user to know that the present time is within the energy-saving time segment, presents the difference in power consumption amount and in electricity billing amount between a case in which the electrical device 180 operates as instructed by the user control, and a case in which the electrical device 180 does not operates as instructed, and waits for the user's decision. Hence, a suppression of the increase in power consumption amount as much as possible is expectable, and an increase in the user's attention to the energy saving is also expectable.

When the direct user control is detected, and the power consumption amount of the electrical device 180 increases upon auctioning as instructed by the direct user control, the control unit 206 of the controller 100 may display advisory information 2300 illustrated in FIG. 23, and when the power consumption amount does not increase, the control unit 206 may cause the electrical device 180 to operate as instructed by the direct user control without displaying the advisory information 2300 illustrated in FIG. 23.

When, for example, the instruction indicated by the direct user control is an instruction to stop the cooling or heating operation by the air conditioner, the decrease in power consumption amount is apparent, and thus the cooling or heating operation by the air conditioner may be stopped without a confirmation from the user. Conversely, when the instruction indicated by the direct user control is an instruction to start the cooling or heating operation by the air conditioner, the increase in power consumption amount is apparent, and thus the advisory information is displayed for a user confirmation.

The control unit 206 of the controller 100 is capable of determining a change in power consumption amount when the operation of the electrical device 180 is changed from the first mode to the second mode based on the device status data illustrated in FIG. 9A, FIG. 9B and indicating the operation status records of the electrical device 180, and the like, and the measurement data illustrated in FIG. 10A, FIG. 10B, and indicating the records of power amount measured by the power measuring device 140, and the like. Hence, upon detecting the direct user control, the control unit 206 of the controller 100 may project a change in power consumption amount when the mode is changed from the present first mode to the second mode corresponding to the direct user control based on the device status data, and the measurement data. Next, when the power consumption amount of the second mode is less than that of the first mode or is equal thereto, the control unit 206 may cause the electrical device 180 to operate as instructed by the direct user control without displaying the advisory information, and when the power consumption amount of the second mode is greater than that of the first mode, the control unit 206 may display the advisory information to inquire with the user whether to cause the electrical device 180 to operate as instructed.

Embodiment 2

Next, a description is given of embodiment 2 according to the present disclosure. In this embodiment, the device control system 1 projects a future energy-saving request based on the tendency of past DR instructions.

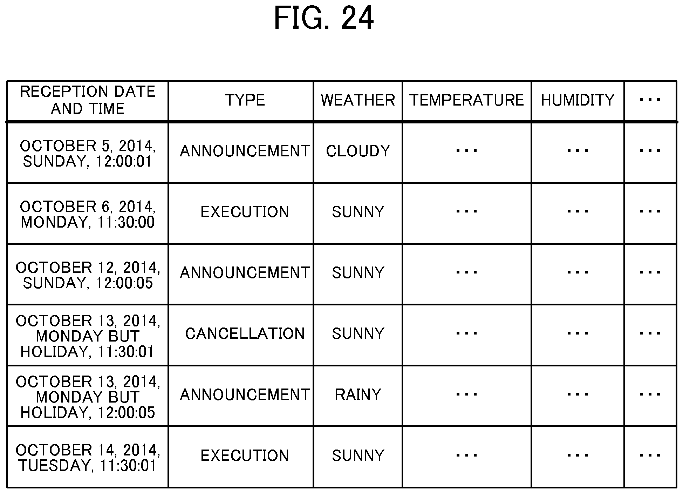

Upon receiving the DR instruction from the DRAS 10, the control unit 206 of the controller 100 associates, as notification information as illustrated in FIG. 24, the details indicated by the DR instruction, information indicating the date and time at which the DR instruction is received, and information indicating a meteorological condition, such as a weather, a temperature, and a room temperature at the date and time at which the DR instruction is received, and stores this notification information in the storage 205.

The control unit 206 of the controller 100 analyzes the tendency of the DR instruction at an arbitrarily timing based on the notification information stored in the storage 205, and projects the future energy-saving request.

For example, FIG. 24 illustrates notification information stored in the storage 205 at a time point that is "October 14, 2014". The controller 100 received, in a past Sunday, the announcement notification for requesting the energy saving at the next Monday. In addition, when the next Monday was a weekday, the energy saving was requested as announced, and when the next Monday was a holiday, the noticed energy-saving request was canceled. Based on such tendency, the control unit 206 of the controller 100 estimates that the announcement notification for requesting the energy saving on the next day is likely to be made on a weekend, and the energy saving is likely to be requested as announced when the day on which the energy saving is requested is a weekday.

Next, the control unit 206 of the controller 100 estimates that there is a high possibility that an energy saving request will be made on a weekday "October 20, 2014" that is the day after an upcoming Sunday which is "October 19, 2014".

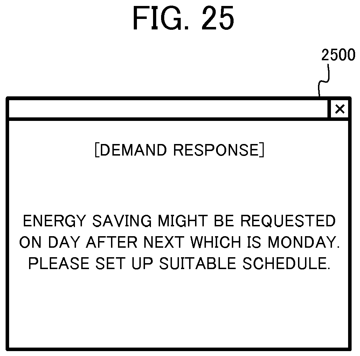

FIG. 25 illustrates a display example advisory information 2500 indicating the projection result. This advisory information 2500 is notified to the user at Saturday, and projects the energy-saving request at the day after next that is Monday. In the case in which the announcement notification is transmitted to the user one day before the energy-saving time segment, the user is able to know of the possibility of any energy-saving request one day before the announcement notification, facilitating the user to plan a further proper schedule for the energy saving in advance.

Regardless of the received DR instruction, the control unit 206 of the controller 100 is capable of presenting the advisory information indicating the projection result to the user. The desirable timing at which the advisory information indicating the projection result is presented to the user is before the DR instruction is received from the DRAS 10.

According to this embodiment, since the preparation time segment of the user for the energy saving is extended, the user's positive response to the energy-saving request is expectable. In addition, there is an advantage such that the user's attention to the energy saving is increased.

Embodiment 3

Next, a description is given of embodiment 3 according to the present disclosure. In this embodiment, the device control system 1 increases the accuracy of the power consumption amount estimation using record information indicating whether the user responded the energy-saving request, and also indicating the financial benefit or the environmental benefit obtained by the energy saving when the user responded to the request.

As illustrated in FIG. 9A, FIG. 9B, the storage 205 of the controller 100 stores the device status data indicating the operation status records of the electrical device 180, and the like. In addition, as illustrated in FIG. 10A, FIG. 10B, the storage 205 of the controller 100 also stores the measurement data indicating the records of the power amount measured by the power measuring device 140, and the like.

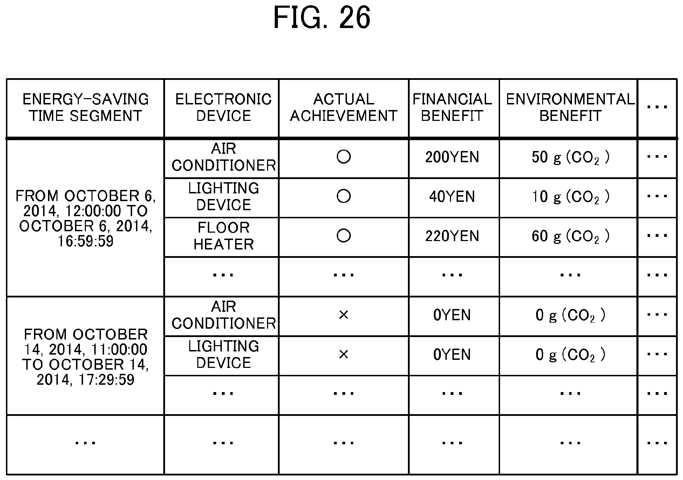

Still further, as illustrated in FIG. 26, the control unit 206 of the controller 100 stores, in the storage 205, the record information indicating whether the user responded to the energy-saving request, and the obtained financial benefit and environmental benefit, and the like, when the user responded to the energy-saving request.

The control unit 206 of the controller 100 increases the accuracy of projection based on the projection value of the power consumption amount on the basis of the created execution plan, and the record information stored in the storage 205 in order to calculate the electricity billing amount corresponding to such projection value.

More specifically, when the electrical device 180 is to operate from a first clock time to a second clock time in the created execution plan, the control unit 206 of the controller 100 obtains actual achieved values of the power consumption amount when this electrical device 180 operated in the past same clock time, and calculates the average value, median value, mode value, maximum value, and the like, of the actual achieved values obtained.

Next, the control unit 206 of the controller 100 calculates a projection value P of the power consumption amount of the electrical device 180 from the first clock time to the second clock time using [formula 1] based on calculated average value AVE, median value MED, mode value MOD, maximum value MAX, minimum value MIN, and the like.

$$P = F(AVE, MED, MOD, MAX, MIN) \qquad \text{[Formula 1]}$$

The definition of a function F is not limited to any particular one according to the present disclosure. The function F may utilize at least one of the average value AVE, the median value MED, the mode value MOD, the maximum value MAX, and the minimum value MIN.

According to this embodiment, since the controller 100 learns the tendency of the power consumption amount of the indoor system based on the past actual achievement, the projection accuracy for the power consumption amount and for the electricity billing amount is increased.

Embodiment 4

Next, a description is given of embodiment 4 according to the present disclosure. In this embodiment, the device control system 1 presents, to the user, the DR participation percentage calculated based on information indicating to respond or not to respond to the energy-saving request or whether the user has responded thereto obtained from the multiple indoor systems.

Upon receiving the announcement notification or the execution notification, the control unit 206 of the controller 100 transmits, to the DRAS 10, reply data indicating to respond or not to respond to the energy-saving request based on the information indicating the operation pattern (pattern A, B or C) input by the user beforehand, or the setting indicating to respond or not to respond to the energy-saving request input by the user in each case. The DRAS 10 receives the reply data from the controller 100.

Although FIG. 1 illustrates a single indoor system, the device control system 1 is capable of having the multiple indoor systems. In general, a different indoor system is installed for each dwelling, each office, and each building. The DRAS 10 receives the replay data from each indoor system.

The DRAS 10 calculates the rate of the number of reply data so as to respond to the energy-saving request relative to all received reply data, that is, the DR participation percentage.

In addition, when the user responds to the energy-saving request, the control unit 206 of the controller 100 transmits, to the DRAS 10, the actual achievement data indicating an actual achieved value by the energy saving after the end of the energy-saving time segment.

Example actual achieved values are a difference between the projection value of the calculated power consumption amount of the controller 100 and the actual measured value, the financial benefit and the environmental benefit obtained by the execution of the energy-saving process, and the like.

The DRAS 10 receives the actual achievement data from each indoor system. Next, the DRAS 10 compiles statistics of the actual achieved values by the energy saving based on the actual achievement data.

For example, the DRAS 10 calculates the average value, median value, mode value, maximum value, and minimum value of the financial benefit obtained by the energy saving. In addition, the DRAS 10 calculates, for example, the average value, median value, mode value, maximum value, and minimum value of the environmental benefit obtained by energy saving.

When the controller 100 requests a transmission of the calculation result, the DRAS 10 transmits the calculation result to the controller 100.

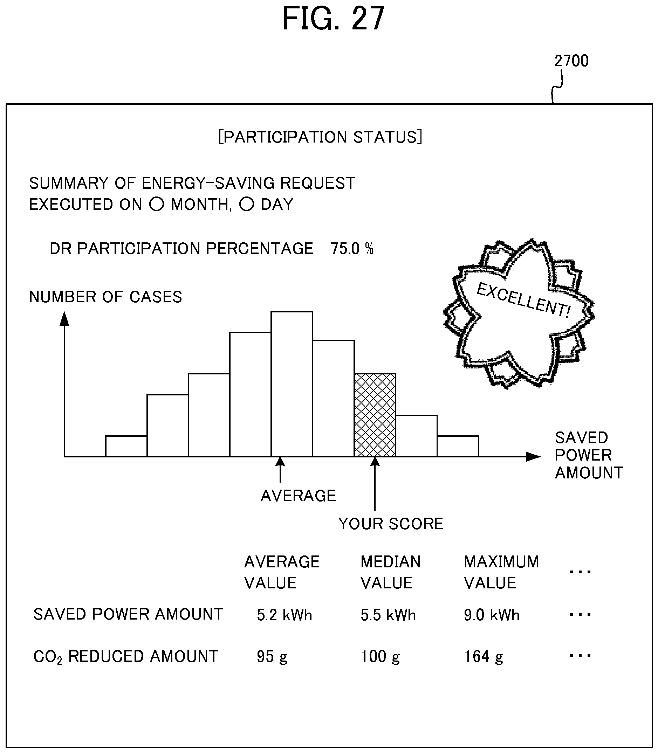

The control unit 206 of the controller 100 receives the calculation result from the DRAS 10, and for example, as illustrated in FIG. 27, displays advisory information 2700 containing the obtained calculation result on the display 251.

The control unit 206 of the controller 100 displays, for example, by histogram, the relative position of the power amount saved by the local system (the indoor system subjected to the management by the controller 100) within the distribution of the power amounts saved by all indoor systems.

Although FIG. 27 illustrates the advisory information 2700 presented to the user after the end of the energy-saving time segment, the control unit 206 of the controller 100 is capable of displaying the advisory information as appropriate until the execution notification or the cancellation notification is received after the announcement notification is received, or within the energy-saving time segment.

When the controller 100 requests the transmission of the calculation result after the announcement notification is transmitted and until the execution notification or the cancellation notification is transmitted, the DRAS 10 calculates the DR participation percentage at the time point at which the request is made, and transmits the DR participation percentage to the controller 100.

In addition, when the controller 100 requests the transmission of the calculation result within the energy-saving time segment, the DRAS 10 calculates the DR participation percentage at the time point at which the request is given, and an actual achieved value of each indoor system, and transmits the calculation results to the controller 100. The control unit 206 of the controller 100 displays advisory information 2700 containing the DR participation percentage and an live actual achieved value at the time point at which the request is given.

According to this embodiment, the user is able to know the status of participation in energy saving of other users, and the actual achieved value of the other users, and the like, and thus the positive user's response to the energy-saving request is expectable. In addition, there is an advantage such that the user's attention to the energy saving is increased.

Embodiment 5

Next, a description is given of embodiment 5 of the present disclosure. According to this embodiment, the indoor system is capable of receiving the supply of electric power from the multiple electric power suppliers.

The DRAS 10 is installed one by one for each electric power supplier. Each power supplier transmits the DR instruction to the indoor system using the locally managed DRAS 10.

Since the demand-supply relationship for the electric power varies electric power supplier by electric power supplier, the DR instruction is transmitted on a date and at a time that is different for each electric power supplier. In addition, the electricity billing rate differ per electric power supplier. Hence, the control unit 206 of the controller 100 analyzes the best suited electric power supplier for the user based on the actual achievement of the DR instruction and the electricity billing rate, generates advisory information indicating the analysis result, and presents such information to the user.

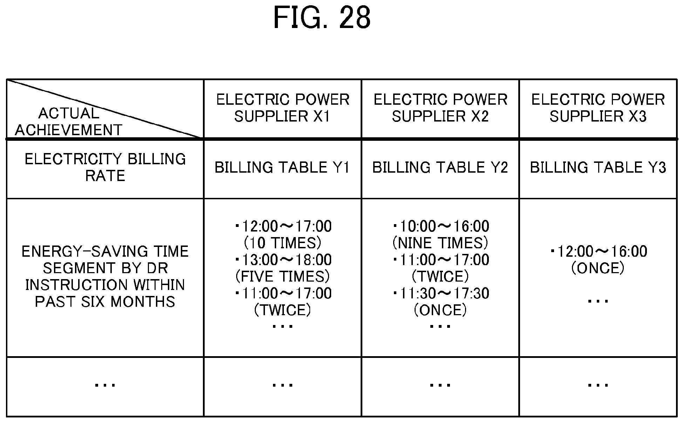

FIG. 28 illustrates example comparison data containing the actual achievement of the DR instruction and the electricity billing rate. The comparison data contains, for each electric power supplier, a billing table, and an energy-saving time segment by the DR instruction within the past predetermined time segment. The control unit 206 of the controller 100 obtains, the DRAS 10 managed by each electric power supplier or the information collecting server 20, data indicating the newest billing table presented by each electric power supplier, and the energy-saving time segment, and stores such data in the storage 205.

The control unit 206 of the controller 100 calculates, for each electric power supplier, the corresponding electricity billing amount to the actual measured value of the power consumption amount within a past certain time segment (for example, the most recent month) using the device status data illustrated in FIG. 9A, FIG. 9B, the measurement data illustrated in FIG. 10A, FIG. 10B, and the comparison data illustrated in FIG. 28. Next, the control unit 206 of the controller 100 determines that the electric power supplier having the lowest calculated electricity billing amount is the best suited electric power supplier to the user.

The control unit 206 of the controller 100 may determine that, when the rate of the number of responses to the energy-saving request relative to the total number of energy-saving requests is smaller than the predetermined value, the electric power supplier having the smallest number of energy-saving requests is the best suited electric power supplier to the user.

When the rate of the number of responses to the energy-saving request relative to the total number of energy-saving requests is greater than the predetermined value, the control unit 206 of the controller 100 determines that the electric power supplier having the largest number of energy-saving requests is the best suited electric power supplier to the user.

The control unit 206 of the controller 100 may provide the advisory information indicating the comparison among the electric power suppliers to the user without specifying the best suited electric power supplier to the user.

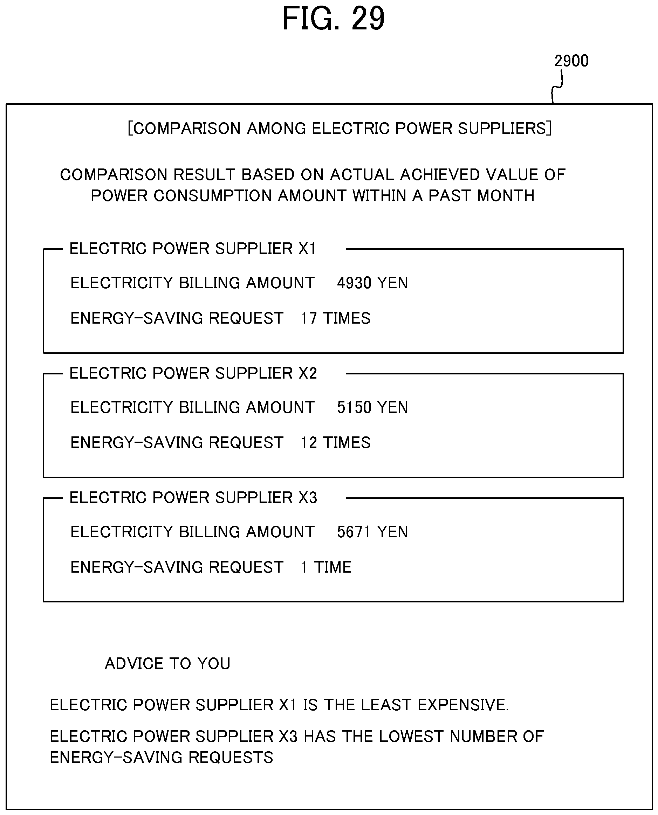

FIG. 29 illustrates example advisory information 2900 indicating the comparison result among the electric power suppliers. The advisory information 2900 contains, for each electric power supplier, the corresponding electricity billing amount to the actual measured value of the power consumption amount within a past certain time segment (for example, the most recent month), and the number of given energy-saving requests. The user is able to select the best suited electric power supplier in view of this advisory information 2900.

According to this embodiment, the user is better able to select the best suited electric power supplier among the multiple electric power suppliers, thereby increasing the user-friendliness of the device control system 1.

Some electric power suppliers may present multiple billing plans. Like the comparison among the multiple electric power suppliers, the control unit 206 of the controller 100 may compare the multiple billing plans, and present the comparison result to the user.

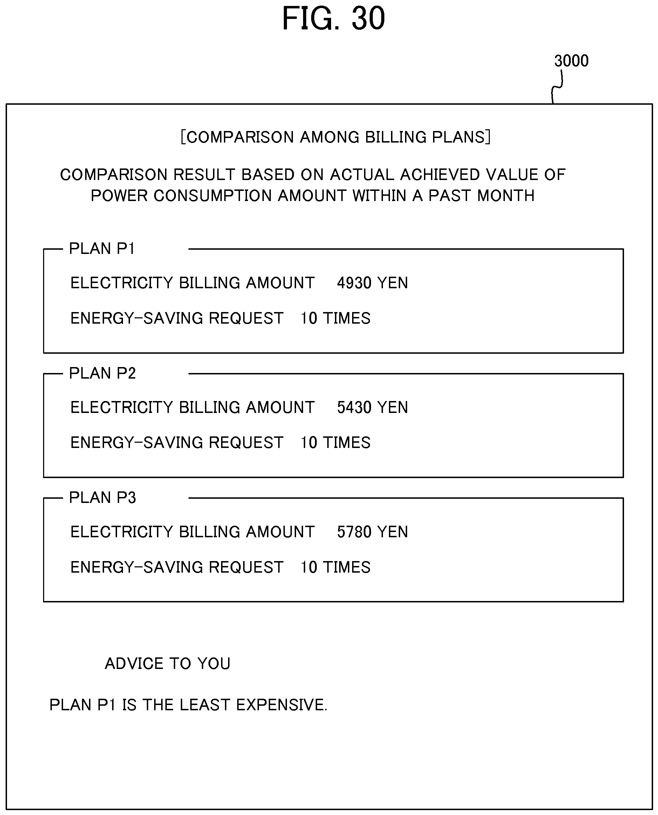

FIG. 30 illustrates example advisory information 3000 indicating the comparison result of the multiple billing plans presented by the same electric power supplier. The advisory information 3000 contains, for each electric power supplier, the corresponding electricity billing amount to the actual measured value of the power consumption amount within a past certain time segment (for example, the most recent month). This enables the user to select the electric power supplier best suited in view of this advisory information 3000.

The present disclosure is not limited to the above embodiments, and various changes and modifications can be made thereto. In addition, respective components in the above embodiments can be freely combined as appropriate.

In each of the above embodiments, the advisory information is displayed on the display 251 of the controller 100. However, the advisory information may be displayed on the display 351 of the user terminal 120 communicable to the controller 100. In this case, the control unit 206 of the controller 100 may transmit the created advisory information to the user terminal 120, and the control unit 307 of the user terminal 120 may display the advisory information received from the controller 100.

Advisory information may be output as sounds from the speakers 252, 253 in addition to displaying the advisory information on the displays 251, 351 or instead of displaying the advisory information on the displays 251, 351. The control unit 206 of the controller 100 or the control unit 307 of the user terminal 120 may present the created advisory information to the user by at least either displaying on the displays 251, 351 or outputting sound from the speakers 252, 352.

A program that causes a computer to operate as all of or a part of the above controller 100 may be distributed in a manner stored in a non-transitory computer readable recording medium, such as a memory card, a CD-ROM, a DVD, or a Magneto Optical disk (MO), installed in another computer to cause such a computer to operate as the above means, or to execute the above processes.

In addition, the program may be stored in the disk device, and the like, of a server device over the Internet, and for example, downloaded to a computer in a manner superimposed on carrier waves.

The foregoing describes some example embodiments for explanatory purposes. Although the foregoing discussion has presented specific embodiments, persons skilled in the art will recognize that changes may be made in form and detail without departing from the broader spirit and scope of the invention. Accordingly, the specification and drawings are to be regarded in an illustrative rather than a restrictive sense. This detailed description, therefore, is not to be taken in a limiting sense, and the scope of the invention is defined only by the included claims, along with the full range of equivalents to which such claims are entitled.

As described above, according to each of the above embodiments, a benefit derived upon responding to an energy-saving request is presented to a user in an easy-to-understand way, and an energy-saving accomplishment is increased.


Reference Signs List

  1 Device control system
  10 DRAS
  20 Information collecting server
  30 Smart meter
  50 Communication network
  100 Controller
  120 User terminal
  130 Autonomous switch board
  140 Power measuring device
  150 Power generating system
  160 Power storing system
  170 Electric vehicle
  180 Electrical device
  201 Communicator
  202 Image processor
  203 Sound processor
  204 Inputter

205 Storage
206 Control unit
251 Display
252 Speaker
301 Communicator
302 Image processor
303 Sound processor
304 I/O device
305 Inputter
306 Storage
307 Control unit
351 Display
352 Speaker
401 Transmitter
402 Receiver
403 Notification information storage
404 Input acceptor
405 Schedule storage
406 Device status storage
407 Measured value storage
408 Projector
409 Creator
410 Presenter
411 Device controller
500, 600 Advisory information
700 Schedule information
800 Execution plan
1200, 1300, 1400, 1500, 2300, 2500, 2700, 2900, 3000 Advisory information

**Claims**

1.  A controller comprising:

    a storage configured to store device status data indicating an operation status of an electrical device, and measurement value data indicating an actual achieved value of a power consumption amount of the electrical device;
    a projector configured to calculate, when an energy saving is requested, based on the device status data and the measurement value data, a first projection value for the power consumption amount of the electrical device in accordance with a first execution plan responding to the request, and a second projection value for the power consumption amount of the electrical device in accordance with a second execution plan not responding to the request; and
    a presenter configured to present a projection result by the projector to a user.

2.  The controller according to claim 1, further comprising a creator configured to create advisory information containing information indicating a benefit obtainable by the user upon responding to the request based on the projection result by the projector,
    wherein the presenter is configured to present the created advisory information to the user.

3.  The controller according to claim 1 or 2, wherein
    the storage is further configured to store schedule information set by the user, the schedule information indicating a schedule to cause the electrical device to operate, and
    the projector is configured to create the first execution plan and the second execution plan based on the stored schedule information.

4.  The controller according to any one of claims 1 to 3, wherein
    the request is to be carried out by any of an announcement notification to announce an energy-saving request within a specified energy-saving time segment, an execution notification to request the energy saving as announced by the announcement notification, and a cancellation notification to cancel the announcement by the announcement notification, and

the projector is configured to calculate the first projection value and the second projection value when the energy saving is requested by the announcement notification.

5. The controller according to claim 4, further comprising a device controller configured to, when the energy saving is requested by the execution notification, control the electrical device based on the created first execution plan within the specified energy-saving time segment when a setting is made by the user so as to respond to the request, and to control the electrical device based on the created second execution plan within the specified energy-saving time segment when a setting is made by the user so as not to respond to the request.

6. The controller according to claim 5, further comprising an input acceptor configured to pre-accept an input, by the user, indicating to respond or not to respond to the request when the request is made,
wherein
the storage is configured to store information indicated by the accepted input beforehand, and
the device controller is configured to control the electrical device in accordance with either the first execution plan or the second execution plan based on the stored information.

7. The controller according to claim 2, wherein the presenter is configured to create and present to the user the advisory information containing at least one of a difference between the calculated first projection value and the calculated second projection value, a difference between an electricity billing amount to be paid by the user and calculated based on the first projection value and an electricity billing amount to be paid by the user and calculated based on the second projection value, or an environmental benefit obtainable upon responding to the request.

8. The controller according to claim 4, wherein
the projector is configured to project, upon detection of an operation to the electrical device within the specified energy-saving time segment, an impact arising from the electrical device being caused to operate in accordance with an instruction indicated by the operation; and
the presenter is configured to present information indicating the projected impact to the user.

9. The controller according to claim 4, wherein
the projector is configured to project, upon detection of an operation to the electrical device within the specified energy-saving time segment, a change in power consumption amount of the electrical device corresponding to the operation, and
the presenter is configured to inquire with the user whether to cause the electrical device to operate in accordance with an instruction indicated by the operation when an increase in power consumption amount is projected.

10. The controller according to any one of claims 1 to 9, wherein the presenter is configured to obtain information indicating a participation percentage to the request from an external server, and to present the obtained information to the user.

11. The controller according to any one of claims 1 to 10, wherein the projector is configured to calculate the first projection value and the second projection value based on the device status data and the measurement value data when the user responded to a request in the past.

12. The controller according to any one of claims 1 to 11, wherein
the storage is further configured to store a record of requests,
the projector is configured to project a future energy-saving request based on the stored record of requests, and
the presenter is configured to present information indicating the projected future energy-saving request to the user.

13. The controller according to any one of claims 1 to 12, wherein
the electrical device is to be supplied with electric power from any one of multiple electric power suppliers,
the projector is configured to project, based on respective pieces of billing data of the multiple electric power suppliers, and the stored device status data and the stored measurement data, an electricity billing amount to be paid by the user for each of the multiple electric power suppliers, and
the presenter is configured to present each projected electricity billing amount to the user.

14. The controller according to claim 13, wherein

the storage is further configured to store a record of requests for each of the multiple electric power suppliers, and the presenter is configured to present the record of requests from each of the multiple electric power suppliers to the user.

**15.** A device control method comprising:

a projecting step of calculating, when an energy saving is requested, a first projection value for a power consumption amount of an electrical device in accordance with a first execution plan responding to the request, and a second projection value for the power consumption amount of the electrical device in accordance with a second execution plan not responding to the request, based on device status data indicating an operation status of the electrical device and measurement value data indicating an actual achieved value of the power consumption amount of the electrical device; and
a presenting step of presenting a projection result in the projecting step to a user.

**16.** A program causing a computer to function as:

a storage configured to store device status data indicating an operation status of an electrical device, and measurement value data indicating an actual achieved value of a power consumption amount of the electrical device;
a projector configured to calculate, when an energy saving is requested, based on the device status data and the measurement value data, a first projection value for the power consumption amount of the electrical device in accordance with a first execution plan responding to the request, and a second projection value for the power consumption amount of the electrical device in accordance with a second execution plan not responding to the request; and
a presenter configured to present a projection result by the projector to a user.

# FIG. 1

# FIG. 2

# FIG. 3

# FIG. 4

# FIG. 5

500

2014/8/31 11:00 >>
The living-room air conditioner has begun
operating in energy-saving mode.
2013/8/31  9:10 >>

Confirm

Logout    Set

Update
all

Go
out    return
home    ...    ...    User
customization

Alarm
off    Family schedule

3.82kW    2.50kW    1.32kW

Generated    Consumed
power    power

Father: business trip

[Demand response]
Energy-saving request received

Execution of scheduled time segment
Tomorrow from 11:00 to 15:00

Setting: now automatically responds to
energy-saving requests

Kids room    Bedroom    Bathroom

Closet    Study    Living room

# FIG. 6

600

2014/8/31 11:00 >>
The living-room air conditioner has begun operating in energy-saving mode.
2013/8/31 9:10 >>

Confirm

Logout    Set

Update all

Go out | return home | ... | ... | User customization

Alarm off

Family schedule

3.82kW    2.50kW    1.32kW

Father: business trip

Generated power    Consumed power

[Demand response]
Energy-saving request received

Execution of scheduled time segment
Tomorrow from 11:00 to 15:00

Respond    Reject to respond

Kids room

Bedroom

Bathroom

Closet

Study

Living room

601    602

29

# FIG. 7

700

| SCHEDULE | USER OR DEVICE | DETAILS | START DATE AND TIME | END DATE AND TIME |
|---|---|---|---|---|
| AGENDA X | FATHER | WORK | OCTOBER 31, 2014, 07:30 | OCTOBER 31, 2014, 19:30 |
| AGENDA Y | MOTHER | SHOPPING | OCTOBER 31, 2014, 10:00 | OCTOBER 31, 2014, 12:00 |
| AGENDA Z | SON | SCHOOL | OCTOBER 31, 2014, 08:00 | OCTOBER 31, 2014, 17:00 |
| . . . | . . . | . . . | . . . | . . . |
| AGENDA W | LIVING-ROOM LIGHTING DEVICE | LIGHT ILLUMINATES | OCTOBER 31, 2014, 18:00 | NOVEMBER 1, 2014, 05:00 |
| . . . | . . . | . . . | . . . | . . . |

# FIG. 8

800

| TIME<br>ELECTRICAL<br>DEVICE | 0 | 1 | 2 | ··· | 10 | 11 | 12 | 13 | 14 | 15 | ··· | 22 | 23 |
|---|---|---|---|---|---|---|---|---|---|---|---|---|---|
| LIVING ROOM LIGHTING DEVICE | | | | | | | | | | | | ON | |
| LIVING ROOM AIR CONDITIONER | PRE-HEATING | | | | OFF | | | | | | | | |
| CHARGING OF ELECTRIC VEHICLE | ON | | | | | | | | | | | ON | |
| HOT-WATER SUPPLY SYSTEM | | | | | | | | | ON | | | | |
| POWER GENERATING SYSTEM | | | | | GENERATING POWER | | | | | | | | |
| ··· | ··· | | | | | | | | | | | | |

# FIG. 9A

| LIVING ROOM AIR CONDITIONER ||
|---|---|
| DATE AND TIME | OPERATION DETAILS |
| OCTOBER 24, 2014, 07:30 | STOP |
| OCTOBER 24, 2014, 07:35 | STOP |
| . . . | . . . |
| OCTOBER 24, 2014, 13:30 | HEATING, TARGET TEMPERATURE: 21 ℃ |
| OCTOBER 24, 2014, 13:35 | HEATING, TARGET TEMPERATURE: 21 ℃ |
| . . . | . . . |

# FIG. 9B

| POWER GENERATING SYSTEM ||
|---|---|
| DATE AND TIME | OPERATION DETAILS |
| OCTOBER 24, 2014, 07:30 | STOP |
| OCTOBER 24, 2014, 07:35 | STOP |
| . . . | . . . |
| OCTOBER 24, 2014, 13:30 | STORING GENERATED POWER |
| OCTOBER 24, 2014, 13:35 | STORING GENERATED POWER |
| . . . | . . . |

# FIG. 10A

| LIVING ROOM AIR CONDITIONER | |
| --- | --- |
| DATE AND TIME | ACTUAL ACHIEVED VALUE OF POWER CONSUMPTION |
| OCTOBER 24, 2014, 07:30 | 0 kW |
| OCTOBER 24, 2014, 07:35 | 0 kW |
| . . . | . . . |
| OCTOBER 24, 2014, 13:30 | 2.5 kW |
| OCTOBER 24, 2014, 13:35 | 2.5 kW |
| . . . | . . . |

# FIG. 10B

| POWER GENERATING SYSTEM | |
| --- | --- |
| DATE AND TIME | ACTUAL ACHIEVED VALUE OF POWER GENERATION AMOUNT |
| OCTOBER 24, 2014, 07:30 | 0.0 kWh |
| OCTOBER 24, 2014, 07:35 | 0.0 kWh |
| . . . | . . . |
| OCTOBER 24, 2014, 13:30 | 5.5 kWh |
| OCTOBER 24, 2014, 13:35 | 5.7 kWh |
| . . . | . . . |

# FIG. 11A

| TIME SLOT | UNIT PRICE [YEN/kWh] |
|---|---|
| 0:00 − 8:59 | 10 |
| 9:00 − 12:59 | 20 |
| 13:00 − 15:59 | 100 |
| 16:00 − 20:59 | 20 |
| 21:00 − 23:59 | 10 |

# FIG. 11B

| TIME SLOT | UNIT PRICE [YEN/kWh] |
|---|---|
| OCTOBER 31, 11:00 − 14:00 | 200 |

# FIG. 11C

| TIME SLOT | REBATE PER UNIT REDUCTION AMOUNT [YEN/kWh] |
|---|---|
| OCTOBER 31, 11:00 − 14:00 | 5 |

# FIG. 12

1250

1200

[Demand response]

If you participate in energy saving, you will save 1140 Yen and the $CO_2$ discharge amount will be reduced by xxx grams.

—— Utilized electricity

- - - - Participating in energy saving

- - - - - - Not participating in energy saving

Power consumption amount

Electricity billing amount (per 1kWh) 38 Yen to 380 Yen

DR

Second projection value 3040 Yen (8kWh) — 1240

Actual measured value

1220

1210

First projection value 1900 Yen (5kWh) — 1230

Time

Present time

# FIG. 13

[Demand response]

Energy saving in progress. You will save 1140 Yen and the $CO_2$ discharge amount will be reduced by xxx grams.

—— Utilized electricity

- - - - Participating in energy saving

...... Not participating in energy saving

Power consumption amount

Electricity billing amount (per 1kWh)
38 Yen to 380 Yen

DR

Actual measured value
190 Yen (0.5kWh)

Second projection value
3040 Yen (8kWh)

First projection value
1900 Yen (5kWh)

Present time

Time

1250
1300
1240
1220
1210
1230
1260
1270

# FIG. 14

1250

1450

1400

[Demand response]

Energy-saving requested. If you participate now, you will save 950 Yen and the $CO_2$ discharge amount will be reduced by xxx grams.

Participate

———— Utilized electricity

▬ ▬ ▬ Participating in energy saving

‑ ‑ ‑ ‑ ‑ Not participating in energy saving

Power consumption amount

Electricity billing amount (per 1kWh)
38 Yen to 380 Yen

DR

Actual measured value
380 Yen (1kWh)

Second projection value
3040 Yen (8kWh)

1240

1220

1210

First projection value
1900 Yen (5kWh)

1230

Time

Present time

1260

1270

# FIG. 15

1500

1250

[Demand response]

Thank you for participating in energy saving. You saved 1500 Yen and the $CO_2$ discharge amount was reduced by xxx grams.

——— Utilized electricity

▪ ▪ ▪ Participating in energy saving

▫ ▫ ▫ Not participating in energy saving

Power consumption amount

Electricity billing amount (per 1kWh)
38 Yen to 380 Yen

DR

Second projection value
3040 Yen (8kWh)

1240

1220

1210

First projection value
1900 Yen (5kWh)

1230

Actual measured value
1540 Yen (4kWh)

Time

Present time

1260          1270

# FIG. 16

# FIG. 17

1701                 1702                 1703

INITIAL SETTING

| PATTERN A | PATTERN B | PATTERN C |
|---|---|---|
| AUTOMATICALLY RESPOND TO DR | INPUT PER DR | NOT AUTOMATICALLY RESPOND TO DR |

| WHEN DR INSTRUCTION IS GIVEN, SETTING TO AUTOMATICALLY PARTICIPATE IN ENERGY SAVING IS MADE | WHEN DR INSTRUCTION IS GIVEN, SELECT IN EACH CASE | WHEN DR INSTRUCTION IS GIVEN, SETTING NOT TO AUTOMATICALLY JOIN ENERGY SAVING IS MADE |

APPLY

1704

# FIG. 18

DEVICE CONTROL
PROCESS

S1801

DR INSTRUCTION
RECEIVED? — NO

YES

S1802 CANCELLATION
NOTIFICATION

ANNOUNCEMENT
NOTIFICATION — DETAILS OF
NOTIFICATION?

EXECUTION
NOTIFICATION

S1803

ANNOUNCEMENT
PROCESS

S1804

EXECUTION
PROCESS

S1805

CANCELLATION
PROCESS

END

# FIG. 19

```
         ╭──────────────────╮
         │   ANNOUNCEMENT   │
         │     PROCESS      │
         ╰──────────────────╯
                  │
                  │            S1901
                  ▼
    ╱─────────────────────────╲         PATTERN C
   ╱      OPERATION PATTERN?    ╲──────────────────┐
    ╲─────────────────────────╱                    │
                  │                                 │
           PATTERN A OR                             │
            PATTERN B                               │
                  ▼                                 │
   ┌──────────────────────────────────┐  S1902     │
   │ CREATE FIRST EXECUTION PLAN       │            │
   │ RESPONDING TO ENERGY-SAVING       │            │
   │ REQUEST, AND CALCULATE FIRST      │            │
   │ PROJECTION VALUE                  │            │
   └──────────────────────────────────┘            │
                  │                                 │
                  ▼                                 │
   ┌──────────────────────────────────┐  S1903     │
   │ CREATE SECOND EXECUTION PLAN NOT  │            │
   │ RESPONDING TO ENERGY-SAVING       │            │
   │ REQUEST, AND CALCULATE SECOND     │            │
   │ PROJECTION VALUE                  │            │
   └──────────────────────────────────┘            │
                  │                                 │
                  ▼                                 │
   ┌──────────────────────────────────┐  S1904     │
   │ CREATE AND DISPLAY ADVISORY       │            │
   │ INFORMATION                       │            │
   └──────────────────────────────────┘            │
                  │             S1905               │
                  ▼                                 │
    ╱─────────────────────────╲      PATTERN A      │
   ╱     OPERATION PATTERN      ╲──────────────────▶│
    ╲─────────────────────────╱                     │
                  │                                 │
            PATTERN B                               │
                  ▼                                 │
   ┌──────────────────────────────────┐  S1906     │
   │         ACCEPT USER INPUT         │            │
   └──────────────────────────────────┘            │
                  │                                 │
                  ▼                                 │
   ┌──────────────────────────────────┐  S1907     │
   │          STORE SETTING            │            │
   └──────────────────────────────────┘            │
                  │◀───────────────────────────────┘
                  ▼
   ┌──────────────────────────────────┐  S1908
   │     GIVE NOTIFICATION TO DRAS     │
   └──────────────────────────────────┘
                  │
                  ▼
         ╭──────────────────╮
         │       END        │
         ╰──────────────────╯
```

# FIG. 20

EXECUTION
PROCESS

OPERATION PATTERN? — S2001 — PATTERN C

PATTERN A OR
PATTERN B

DISPLAY ADVISORY INFORMATION — S2002

USER INSTRUCTION
GIVEN? — S2003

YES

NO

ACCEPT USER INPUT — S2004

STORE SETTING — S2005

RESPOND TO ENERGY
SAVING? — S2006 — NO

YES

WITHIN ENERGY-SAVING
TIME SEGMENT? — S2007 — NO

YES

ENERGY-SAVING PROCESS — S2008

UPDATE ADVISORY INFORMATION — S2009

ENERGY-SAVING TIME
SEGMENT ENDED? — S2010 — NO

YES

END

# FIG. 21

```
        ╭──────────────────╮
        │   CANCELLATION   │
        │     PROCESS      │
        ╰──────────────────╯
                 │
                 ▼
  ┌───────────────────────────────────────┐   S2101
  │   DISCARD CREATED EXECUTION PLAN       │
  └───────────────────────────────────────┘
                 │
                 ▼
  ┌───────────────────────────────────────┐   S2102
  │   INFORM USER OF CANCELLATION OF       │
  │      ENERGY-SAVING REQUEST             │
  └───────────────────────────────────────┘
                 │
                 ▼
            ╭──────────╮
            │   END    │
            ╰──────────╯
```

# FIG. 22

```
        ┌──────────────────────┐
        │   ENERGY-SAVING      │
        │     PROCESS          │
        └──────────────────────┘
                   │
                   ▼                          S2201
        ╱──────────────────────╲ NO
       ⟨  WITHIN ENERGY-SAVING  ⟩────────────┐
        ╲   TIME SEGMENT?      ╱             │
                   │ YES                     │
                   ▼                  S2202   │
        ┌──────────────────────────────┐     │
        │ RESTRICT POWER CONSUMPTION   │     │
        │          AMOUNT              │     │
        └──────────────────────────────┘     │
                   │                  S2203   │
          NO      ╱────────────────╲          │
       ┌────────⟨ USER CONTROL GIVEN? ⟩       │
       │         ╲────────────────╱           │
       │              │ YES                    │
       │              ▼                S2204   │
       │  ┌──────────────────────────────┐    │
       │  │ CALCULATE PROJECTED IMPACT IF │   │
       │  │ PROCESSED AS INSTRUCTED BY    │   │
       │  │        USER CONTROL           │   │
       │  └──────────────────────────────┘    │
       │              │                S2205   │
       │              ▼                        │
       │  ┌──────────────────────────────┐    │
       │  │ CREATE AND DISPLAY ADVISORY   │   │
       │  │        INFORMATION            │   │
       │  └──────────────────────────────┘    │
       │              │                S2206   │
       │              ▼                        │
       │  ┌──────────────────────────────┐    │
       │  │      ACCEPT USER INPUT        │   │
       │  └──────────────────────────────┘    │
       │              │                S2207   │
       │              ▼                        │
       │      ╱────────────────╲  NO           │
       │     ⟨ EXECUTE PROCESS AS ⟩────────────┤
       │     ⟨ INSTRUCTED BY USER  ⟩           │
       │      ╲   CONTROL?       ╱             │
       │              │ YES                     │
       │              ▼                S2208    │
       │  ┌──────────────────────────────┐     │
       │  │ EXECUTE PROCESS AS INSTRUCTED │    │
       │  │    BY USER CONTROL            │    │
       │  └──────────────────────────────┘     │
       │              │                         │
       │              ◄─────────────────────────┘
       │              │
       │              ▼
       │         ┌─────────┐
       │         │   END   │
       │         └─────────┘
```

# FIG. 23

2300

[DEMAND RESPONSE]

PRESENTLY IN ENERGY-SAVING
TIME SEGMENT.
IF YOU TURN ON AIR CONDITIONER,
AN INCREASE IN ELECTRICITY BILLING
AMOUNT BY 500 YEN IS EXPECTED.

- - - - PROJECTED POWER
CONSUMPTION AMOUNT IF
AIR CONDITIONER IS
TURNED ON FROM NOW

| TURN ON AIR CONDITIONER | TURN OFF AIR CONDITIONER |

2330          2340

Power
consumption
amount

Electricity billing amount
(per 1kWh)
38 Yen to 380 Yen

DR

Actual measured value
190 Yen (0.5kWh)

Second projection value
3040 Yen (8kWh)

1240

1220

1210

First projection value
1900 Yen (5kWh)

1230

Time

PRESENT
TIME

Third projection value
2400 Yen (6kWh)

1260          1270          2310    2320

# FIG. 24

| RECEPTION DATE AND TIME | TYPE | WEATHER | TEMPERATURE | HUMIDITY | · · · |
|---|---|---|---|---|---|
| OCTOBER 5, 2014, SUNDAY, 12:00:01 | ANNOUNCEMENT | CLOUDY | · · · | · · · | · · · |
| OCTOBER 6, 2014, MONDAY, 11:30:00 | EXECUTION | SUNNY | · · · | · · · | · · · |
| OCTOBER 12, 2014, SUNDAY, 12:00:05 | ANNOUNCEMENT | SUNNY | · · · | · · · | · · · |
| OCTOBER 13, 2014, MONDAY BUT HOLIDAY, 11:30:01 | CANCELLATION | SUNNY | · · · | · · · | · · · |
| OCTOBER 13, 2014, MONDAY BUT HOLIDAY, 12:00:05 | ANNOUNCEMENT | RAINY | · · · | · · · | · · · |
| OCTOBER 14, 2014, TUESDAY, 11:30:01 | EXECUTION | SUNNY | · · · | · · · | · · · |

# FIG. 25

2500

[DEMAND RESPONSE]

ENERGY SAVING MIGHT BE REQUESTED
ON DAY AFTER NEXT WHICH IS MONDAY.
PLEASE SET UP SUITABLE SCHEDULE.

# FIG. 26

| ENERGY–SAVING TIME SEGMENT | ELECTRONIC DEVICE | ACTUAL ACHIEVEMENT | FINANCIAL BENEFIT | ENVIRONMENTAL BENEFIT | ... |
|---|---|---|---|---|---|
| FROM OCTOBER 6, 2014, 12:00:00 TO OCTOBER 6, 2014, 16:59:59 | AIR CONDITIONER | ○ | 200YEN | 50 g ($CO_2$) | ... |
| | LIGHTING DEVICE | ○ | 40YEN | 10 g ($CO_2$) | ... |
| | FLOOR HEATER | ○ | 220YEN | 60 g ($CO_2$) | ... |
| | ... | ... | ... | ... | ... |
| FROM OCTOBER 14, 2014, 11:00:00 TO OCTOBER 14, 2014, 17:29:59 | AIR CONDITIONER | × | 0YEN | 0 g ($CO_2$) | ... |
| | LIGHTING DEVICE | × | 0YEN | 0 g ($CO_2$) | ... |
| | ... | ... | ... | ... | ... |
| ... | ... | ... | ... | ... | ... |

# FIG. 27

2700

[PARTICIPATION STATUS]

SUMMARY OF ENERGY-SAVING REQUEST
EXECUTED ON ○ MONTH, ○ DAY

DR PARTICIPATION PERCENTAGE  75.0 %

NUMBER OF CASES

EXCELLENT!

SAVED
POWER
AMOUNT

AVERAGE

YOUR SCORE

|  | AVERAGE VALUE | MEDIAN VALUE | MAXIMUM VALUE | · · · |
|---|---|---|---|---|
| SAVED POWER AMOUNT | 5.2 kWh | 5.5 kWh | 9.0 kWh | · · · |
| CO$_2$ REDUCED AMOUNT | 95 g | 100 g | 164 g | · · · |

# FIG. 28

| ACTUAL ACHIEVEMENT | ELECTRIC POWER SUPPLIER X1 | ELECTRIC POWER SUPPLIER X2 | ELECTRIC POWER SUPPLIER X3 |
|---|---|---|---|
| ELECTRICITY BILLING RATE | BILLING TABLE Y1 | BILLING TABLE Y2 | BILLING TABLE Y3 |
| ENERGY-SAVING TIME SEGMENT BY DR INSTRUCTION WITHIN PAST SIX MONTHS | ·12:00～17:00 (10 TIMES)<br>·13:00～18:00 (FIVE TIMES)<br>·11:00～17:00 (TWICE)<br>・・・ | ·10:00～16:00 (NINE TIMES)<br>·11:00～17:00 (TWICE)<br>·11:30～17:30 (ONCE)<br>・・・ | ·12:00～16:00 (ONCE)<br><br>・・・ |
| ・・・ | ・・・ | ・・・ | ・・・ |

# FIG. 29

2900

[COMPARISON AMONG ELECTRIC POWER SUPPLIERS]

COMPARISON RESULT BASED ON ACTUAL ACHIEVED VALUE OF
POWER CONSUMPTION AMOUNT WITHIN A PAST MONTH

ELECTRIC POWER SUPPLIER X1

ELECTRICITY BILLING AMOUNT   4930 YEN

ENERGY-SAVING REQUEST   17 TIMES

ELECTRIC POWER SUPPLIER X2

ELECTRICITY BILLING AMOUNT   5150 YEN

ENERGY-SAVING REQUEST   12 TIMES

ELECTRIC POWER SUPPLIER X3

ELECTRICITY BILLING AMOUNT   5671 YEN

ENERGY-SAVING REQUEST   1 TIME

ADVICE TO YOU

ELECTRIC POWER SUPPLIER X1 IS THE LEAST EXPENSIVE.

ELECTRIC POWER SUPPLIER X3 HAS THE LOWEST NUMBER OF
ENERGY-SAVING REQUESTS

# FIG. 30

3000

[COMPARISON AMONG BILLING PLANS]

COMPARISON RESULT BASED ON ACTUAL ACHIEVED VALUE OF POWER CONSUMPTION AMOUNT WITHIN A PAST MONTH

PLAN P1

ELECTRICITY BILLING AMOUNT    4930 YEN

ENERGY-SAVING REQUEST   10 TIMES

PLAN P2

ELECTRICITY BILLING AMOUNT    5430 YEN

ENERGY-SAVING REQUEST   10 TIMES

PLAN P3

ELECTRICITY BILLING AMOUNT    5780 YEN

ENERGY-SAVING REQUEST   10 TIMES

ADVICE TO YOU

PLAN P1 IS THE LEAST EXPENSIVE.

## INTERNATIONAL SEARCH REPORT

| | International application No. |
|---|---|
| | PCT/JP2014/079215 |

A.  CLASSIFICATION OF SUBJECT MATTER
*H02J13/00(2006.01)i, H02J3/14(2006.01)i*

According to International Patent Classification (IPC) or to both national classification and IPC

B.  FIELDS SEARCHED

Minimum documentation searched (classification system followed by classification symbols)
H02J13/00, H02J3/14

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
|---|---|---|
| X<br>Y<br>A | JP 2014-96946 A  (Toshiba Corp.),<br>22 May 2014 (22.05.2014),<br>paragraphs [0020] to [0070], [0187] to [0193];<br>fig. 16<br>& US 2014/0188295 A    & WO 2014/073556 A1<br>& CN 103917954 A | 1-3,7,11,15,<br>16<br>4-6,10,13<br>8,9,12,14 |
| Y | JP 2014-93898 A  (Nippon Telegraph and<br>Telephone Corp.),<br>19 May 2014 (19.05.2014),<br>paragraphs [0081] to [0099]<br>(Family: none) | 4-6,10,13 |

| ☒ | Further documents are listed in the continuation of Box C. | ☐ | See patent family annex. |
|---|---|---|---|

\*     Special categories of cited documents:
"A"   document defining the general state of the art which is not considered    to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>27 January 2015 (27.01.15) | Date of mailing of the international search report<br>10 February 2015 (10.02.15) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (July 2009)

**INTERNATIONAL SEARCH REPORT**

| International application No. |
|---|
| PCT/JP2014/079215 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2012-151992 A  (Hitachi, Ltd.),<br>09 August 2012 (09.08.2012),<br>paragraphs [0075] to [0077], [0099] to [0100];<br>fig. 1, 18<br>& US 2013/0289785 A1    & EP 2667472 A1<br>& WO 2012/098729 A1 | 10,13 |
| Y | JP 2013-97673 A  (Mitsubishi Electric Building<br>Techno-Service Co., Ltd.),<br>20 May 2013 (20.05.2013),<br>entire text; all drawings<br>(Family: none) | 13 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014120787 A